# EUROPEAN PATENT SPECIFICATION

(11) **EP 2 899 954 B1**
(45) Date of publication and mention of the grant of the patent: **22.11.2017**
(21) Application number: 14001611.4
(22) Date of filing: 07.05.2014
(51) Int. Cl.: G06F 3/0484, G06F 3/0481, H04M 1/725

(54) **Mobile terminal**
Mobiles Endgerät
Terminal mobile

(30) Priority: 22.01.2014 KR 20140007903
(43) Date of publication of application: 29.07.2015
(73) Proprietor: LG Electronics, Inc., Seoul 150-721 (KR)
(72) Inventor: Choi, Younhwa, 137-893 Seoul (KR); Her, Sooyoung, 137-893 Seoul (KR); Hwang, Inyong, 137-893 Seoul (KR); Lee, Jungjoon, 137-893 Seoul (KR); Lee, Taekon, 137-893 Seoul (KR)
(74) Representative: Beyer, Andreas

(56) References cited:
- WO-A1-2013/155988
- US-A1- 2010 269 040
- US-A1- 2014 006 944

## Description

### BACKGROUND OF THE INVENTION

### 1. Field of the Invention

The present invention relates to a mobile terminal including a user interface for quickly executing a recommendation function and a method of controlling the mobile terminal.

### 2. Background of the Invention

In general, a terminal may be classified into a mobile (portable) terminal and a stationary terminal. The mobile terminal may be also classified into a handheld terminal and a vehicle mounted terminal.
As functions of the terminal become more diversified, the terminal can support more complicated functions such as capturing images or video, reproducing music or video files, playing games, receiving broadcast signals, and the like. By comprehensively and collectively implementing such functions, the mobile terminal may be embodied in the form of a multimedia player or a device.
In addition, a variety of complex functions are executed at the same time. In the related art, the user has inconvenience in entering separate setting screens and setting the multiple functions in order to use the complex functions. US2014006944 discloses a visual help user interface providing visual guidance to achieve a given action.

### SUMMARY OF THE INVENTION

Therefore, an aspect of the present invention is to provide a method of quickly executing a function associated with current status information without entering a separate setting screen.
Another object of the present invention is to change status information and thus enhance security when the status information is changed.
To achieve these and other advantages and in accordance with the purpose of present invention, as embodied and broadly described herein, there is provided a mobile terminal including: a display unit; and a controller that is configured so at least one recommendation function is able to be provided based on status information relating to a status of the mobile terminal, in which the controller outputs to one region of the display unit at least one graphic object representing at least the one recommendation function, and when the one graphic object is selected from among the at least graphic object or more, executes the recommendation function represented by the selected one graphic object.

In the mobile terminal, if a first function is executed in the current mobile terminal, the recommendation function may be a second function different from the first function, which needs to be executed together in executing the first function.

In the mobile terminal, the graphic object may be output to the vicinity of a region on which the last touch is detected.

In the mobile terminal, in response to application of different touches to the graphic object, the controller may execute different functions.

In the mobile terminal, when a first touch is applied to the graphic object, the controller may execute the recommendation function that is representing by the graphic object and when a second touch different from the first touch is applied to the graphic object, the controller may no longer display the graphic object on the display unit.

In the mobile terminal, if a touch is not applied to the graphic object for a predetermined time, the graphic object may disappear from the display unit.

In the mobile terminal, when the current status information is changed to status information different from the current status information, the controller may end the recommendation function that is executed.

In the mobile terminal, when it is detected that an execution screen of a specific application is output on the display unit, the controller may output a graphic object representing a locking prevention function that prevents switching to a locked state in which receiving of a user's control command is limited, and while the graphic object is selected and the mobile terminal continues to be in the locked state, in response to detection of a predetermined gesture, the controller may temporarily switch the locked state to a suspended state and may display the execution screen of the specific application on the display unit instead of a locking screen indication the locked state.

In the mobile terminal, when the execution screen of the specific application is output, when a control command that is not associated with the execution screen is applied, the controller may switch the mobile terminal back to the locked state and may output on the display unit the locking screen indicating the locked state.

In the mobile terminal, when the locked state is switched to a suspended state according to the control command, the controller may execute a function corresponding to the control command.

In the mobile terminal, when the locked state is temporarily switched to the suspended state and then an additional control command is not applied for a predetermined time, the controller may switch the mobile terminal back to the locked state.

In the mobile terminal, the controller may output a list associated with at least one application that is currently executed, using the status information, and may output a graphic object representing a function that displays at least one portion of an execution screen of an application in a sliding manner, to the vicinity of the at least one application in the list.

In the mobile terminal, when one graphic object is selected from among the graphic objects that are output to the vicinity of the at least one application, the controller may output the execution screen of the application corresponding to the selected one graphic object in the sliding manner.

In the mobile terminal, the at least one application may be an application that is used a predetermined number of times or more by a user.

In the mobile terminal, an image object linked to multiple functions may be output to one region of the display unit, and in response to application of a touch to the graphic object, the controller may move at least one image object, among the multiple image objects, from original positions of the multiple image objects to the vicinity of a region on which the graphic object is displayed.

In the mobile terminal, when the image object is output to the vicinity of the graphic object, when the touch is applied back to the graphic object, the controller may inactivate the graphic object and may not display on the display unit the image object that is displayed on the vicinity of the graphic object.

In the mobile terminal, when a predetermined time elapses after the graphic object is inactivated, the controller may not display the graphic object on the display unit.

To achieve these and other advantages and in accordance with the purpose of this specification, as embodied and broadly described herein, there is provided a method of controlling a mobile terminal, including: detecting status information relating to a status of the mobile terminal; displaying on a display unit at least one graphic object representing at least one recommendation function using the status information; and executing the recommendation function represented by one graphic object when the one graphic object is selected from among the at least graphic object or more.

In the mobile terminal, the recommendation function may be a function that is executable along with a function that is executed in the current mobile terminal.

In the method, when the current status information is changed, the recommendation function that is executed is ended.

Further scope of applicability of the present application will become more apparent from the detailed description given hereinafter. However, it should be understood that the detailed description and specific examples, while indicating preferred embodiments of the invention, are given by way of illustration only, since various changes and modifications within the scope of the invention will become apparent to those skilled in the art from the detailed description.

### BRIEF DESCRIPTION OF THE DRAWINGS

The accompanying drawings, which are included to provide a further understanding of the invention and are incorporated in and constitute a part of this specification, illustrate exemplary embodiments and together with the description serve to explain the principles of the invention.

In the drawings:
FIG. 1A is a block diagram illustrating a mobile terminal according to one embodiment of the present invention;
FIGS. 1B and 1C are diagrams of the mobile terminal according to one embodiment, when viewed from different angles;
FIG. 2 is a flowchart of a method in which a recommendation function is provided in the mobile terminal according to one embodiment of the present invention;
FIGS. 3A(a) to 3A(c), FIGS. 3B(a) to 3B(d), and FIGS. 3C(a) to 3C(c) are diagrams illustrating the method in which the recommendation function is provided in the mobile terminal according to one embodiment;
FIGS. 4A(a) to 4A(c) and FIGS. 4B(a) to 4B(c) are diagrams illustrating a method in which a graphic object representing at least one recommendation function disappears from the display unit;
FIGS. 5A(a) to 5A(c), FIGS. 5B(a) to 5B(d), FIGS 5C(a) to 5C(d), and FIGS. 5D(a) to 5D(d) are diagrams illustrating a control method when the mobile terminal according to one embodiment of the present invention is switched to a locked state;
FIGS. 6A(a) to 6A(c), FIGS. 6B(a) to 6B(c), FIGS. 6C(a) and 6C(b), FIGS. 6D(a) and 6D(b), FIGS. 6E(a) to 6E(c), and FIGS. 6F(a) to 6F(d) are diagrams illustrating various methods according to the present invention in which at least one recommendation function is executed based on status information; and
FIGS. 7A(a) and 7A(b), FIGS. 7B(a) to 7B(c), and FIGS. 7C(a) and 7C(b) are diagrams illustrating a method of executing functions quickly and conveniently using various user gestures.

### DETAILED DESCRIPTION OF THE INVENTION

Description will now be given in detail according to exemplary embodiments disclosed herein, with reference to the accompanying drawings. For the sake of brief description with reference to the drawings, the same or equivalent components may be provided with the same or similar reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function.

Mobile terminals presented herein may be implemented using a variety of different types of terminals. Examples of such terminals include cellular phones, smart phones, user equipment, laptop computers, digital broadcast terminals, personal digital assistants (PDAs), portable multimedia players (PMPs), navigators, portable computers (PCs), slate PCs, tablet PCs, ultra books, wearable devices (for example, smart watches, smart glasses, head mounted displays (HMDs)), and the like.

By way of non-limiting example only, further description will be made with reference to particular types of mobile terminals. However, such teachings apply equally to other types of terminals, such as those types noted above. In addition, these teachings may also be applied to stationary terminals such as digital TV, desktop computers, and the like.

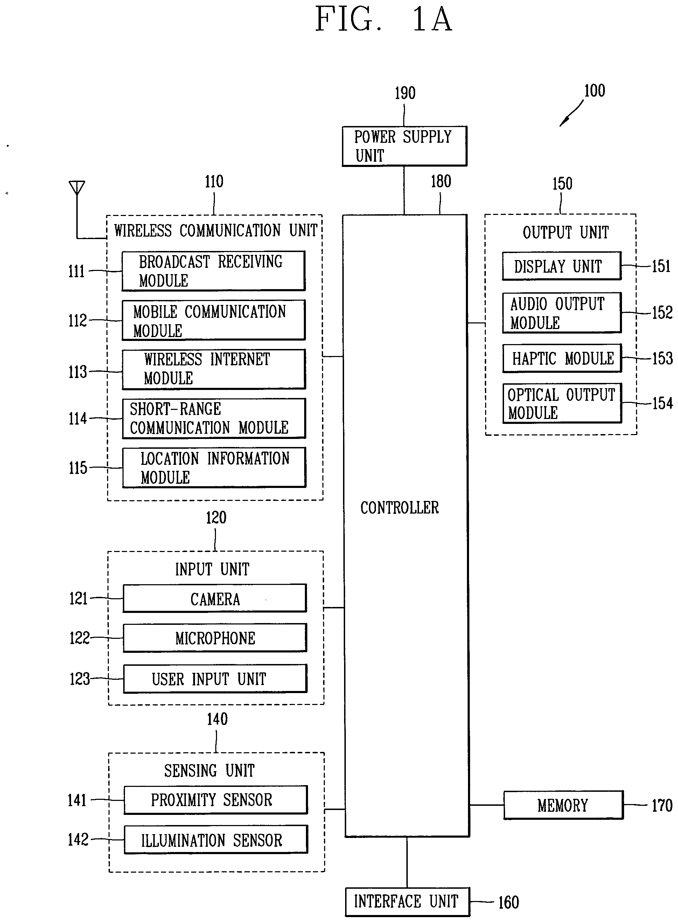

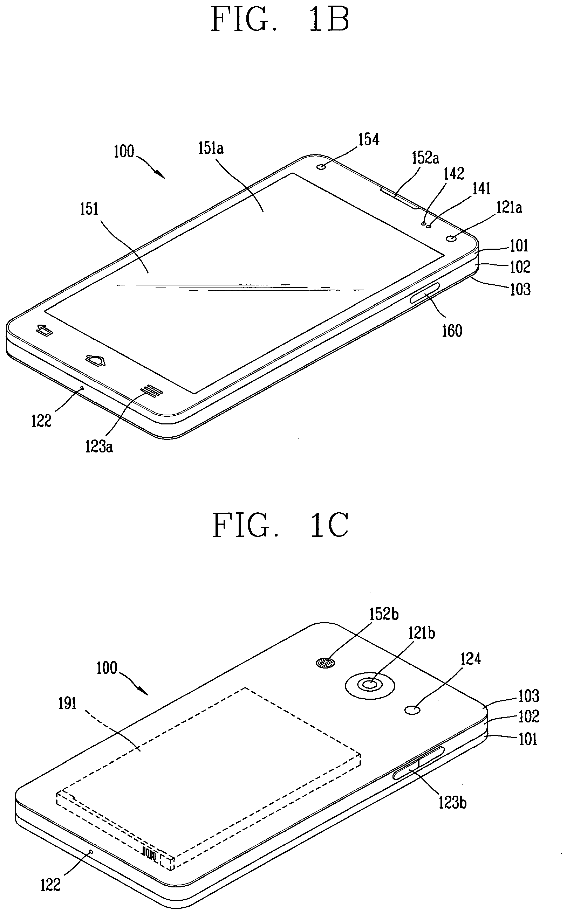

Reference is now made to FIGS. 1A-1C, where FIG. 1A is a block diagram of a mobile terminal in accordance with the present invention, and FIGS. 1B and 1C are conceptual views of one example of the mobile terminal, viewed from different directions.

The mobile terminal 100 is shown having components such as a wireless communication unit 110, an input unit 120, a sensing unit 140, an output unit 150, an interface unit 160, a memory 170, a controller 180, and a power supply unit 190. All of the illustrated components is not a requirement, and that greater or fewer components may alternatively be implemented.

Referring now to FIG. 1A, the mobile terminal 100 is shown having the wireless communication unit 110 configured with several commonly implemented components. For instance, the wireless communication unit 110 typically includes one or more components which permit wireless communication between the mobile terminal 100 and a wireless communication system or network within which the mobile terminal is located.

The wireless communication unit 110 typically includes one or more modules which permit communications such as wireless communications between the mobile terminal 100 and a wireless communication system, communications between the mobile terminal 100 and another mobile terminal, communications between the mobile terminal 100 and an external server. Further, the wireless communication unit 110 typically includes one or more modules which connect the mobile terminal 100 to one or more networks.

To facilitate such communications, the wireless communication unit 110 includes one or more of a broadcast receiving module 111, a mobile communication module 112, a wireless Internet module 113, a short-range communication module 114, and a location information module 115.

The input unit 120 includes a camera 121 for obtaining images or video, a microphone 122, which is one type of audio input device for inputting an audio signal, and a user input unit 123 (for example, a touch key, a push key, a mechanical key, a soft key, and the like) for allowing a user to input information. Data (for example, audio, video, image, and the like) is obtained by the input unit 120 and may be analyzed and processed by controller 180 according to device parameters, user commands, and combinations thereof.

The sensing unit 140 is typically implemented using one or more sensors configured to sense internal information of the mobile terminal, the surrounding environment of the mobile terminal, user information, and the like. For example, in FIG. 1A, the sensing unit 140 is shown having a proximity sensor 141 and an illumination sensor 142.

If desired, the sensing unit 140 may alternatively or additionally include other types of sensors or devices, such as a touch sensor, an acceleration sensor, a magnetic sensor, a G-sensor, a gyroscope sensor, a motion sensor, an RGB sensor, an infrared (IR) sensor, a finger scan sensor, a ultrasonic sensor, an optical sensor (for example, camera 121), a microphone 122, a battery gauge, an environment sensor (for example, a barometer, a hygrometer, a thermometer, a radiation detection sensor, a thermal sensor, and a gas sensor, among others), and a chemical sensor (for example, an electronic nose, a health care sensor, a biometric sensor, and the like), to name a few. The mobile terminal 100 may be configured to utilize information obtained from sensing unit 140, and in particular, information obtained from one or more sensors of the sensing unit 140, and combinations thereof.

The output unit 150 is typically configured to output various types of information, such as audio, video, tactile output, and the like. The output unit 150 is shown having a display unit 151, an audio output module 152, a haptic module 153, and an optical output module 154.

The display unit 151 may have an inter-layered structure or an integrated structure with a touch sensor in order to facilitate a touch screen. The touch screen may provide an output interface between the mobile terminal 100 and a user, as well as function as the user input unit 123 which provides an input interface between the mobile terminal 100 and the user.

The interface unit 160 serves as an interface with various types of external devices that can be coupled to the mobile terminal 100. The interface unit 160, for example, may include any of wired or wireless ports, external power supply ports, wired or wireless data ports, memory card ports, ports for connecting a device having an identification module, audio input/output (I/O) ports, video I/O ports, earphone ports, and the like. In some cases, the mobile terminal 100 may perform assorted control functions associated with a connected external device, in response to the external device being connected to the interface unit 160.

The memory 170 is typically implemented to store data to support various functions or features of the mobile terminal 100. For instance, the memory 170 may be configured to store application programs executed in the mobile terminal 100, data or instructions for operations of the mobile terminal 100, and the like. Some of these application programs may be downloaded from an external server via wireless communication. Other application programs may be installed within the mobile terminal 100 at time of manufacturing or shipping, which is typically the case for basic functions of the mobile terminal 100 (for example, receiving a call, placing a call, receiving a message, sending a message, and the like). It is common for application programs to be stored in the memory 170, installed in the mobile terminal 100, and executed by the controller 180 to perform an operation (or function) for the mobile terminal 100.

The controller 180 typically functions to control overall operation of the mobile terminal 100, in addition to the operations associated with the application programs. The controller 180 may provide or process information or functions appropriate for a user by processing signals, data, information and the like, which are input or output by the various components depicted in Fig. 1A, or activating application programs stored in the memory 170. As one example, the controller 180 controls some or all of the components illustrated in FIGS. 1A-1C according to the execution of an application program that have been stored in the memory 170.

The power supply unit 190 can be configured to receive external power or provide internal power in order to supply appropriate power required for operating elements and components included in the mobile terminal 100. The power supply unit 190 may include a battery, and the battery may be configured to be embedded in the terminal body, or configured to be detachable from the terminal body.

Referring still to FIG. 1A, various components depicted in this figure will now be described in more detail. Regarding the wireless communication unit 110, the broadcast receiving module 111 is typically configured to receive a broadcast signal and/or broadcast associated information from an external broadcast managing entity via a broadcast channel. The broadcast channel may include a satellite channel, a terrestrial channel, or both. In some embodiments, two or more broadcast receiving modules 111 may be utilized to facilitate simultaneously receiving of two or more broadcast channels, or to support switching among broadcast channels.

The mobile communication module 112 can transmit and/or receive wireless signals to and from one or more network entities. Typical examples of a network entity include a base station, an external mobile terminal, a server, and the like. Such network entities form part of a mobile communication network, which is constructed according to technical standards or communication methods for mobile communications (for example, Global System for Mobile Communication (GSM), Code Division Multi Access (CDMA), CDMA2000(Code Division Multi Access 2000), Wideband CDMA (WCDMA), High Speed Downlink Packet access (HSDPA), Long Term Evolution (LTE), and the like).

Examples of wireless signals transmitted and/or received via the mobile communication module 112 include audio call signals, video (telephony) call signals, or various formats of data to support communication of text and multimedia messages.

The wireless Internet module 113 is configured to facilitate wireless Internet access. This module may be internally or externally coupled to the mobile terminal 100. The wireless Internet module 113 may transmit and/or receive wireless signals via communication networks according to wireless Internet technologies.

Examples of such wireless Internet access include Wireless LAN (WLAN), Wireless Fidelity (Wi-Fi), Wi-Fi Direct, Digital Living Network Alliance (DLNA), Wireless Broadband (WiBro), Worldwide Interoperability for Microwave Access (WiMAX), High Speed Downlink Packet Access (HSDPA), Long Term Evolution (LTE), and the like. The wireless Internet module 113 may transmit/receive data according to one or more of such wireless Internet technologies, and other Internet technologies as well.

In some embodiments, when the wireless Internet access is implemented according to, for example, WiBro, HSDPA, GSM, CDMA, WCDMA, LTE and the like, as part of a mobile communication network, the wireless Internet module 113 performs such wireless Internet access. As such, the Internet module 113 may cooperate with, or function as, the mobile communication module 112.

The short-range communication module 114 is configured to facilitate short-range communications. Suitable technologies for implementing such short-range communications include BLUETOOTH™, Radio Frequency IDentification (RFID), Infrared Data Association (IrDA), Ultra-WideBand (UWB), ZigBee, Near Field Communication (NFC), Wireless-Fidelity (Wi-Fi), Wi-Fi Direct, Wireless USB(Wireless Universal Serial Bus), and the like. The short-range communication module 114 in general supports wireless communications between the mobile terminal 100 and a wireless communication system, communications between the mobile terminal 100 and another mobile terminal 100, or communications between the mobile terminal and a network where another mobile terminal 100 (or an external server) is located, via wireless area networks. One example of the wireless area networks is a wireless personal area networks.

In some embodiments, another mobile terminal (which may be configured similarly to mobile terminal 100) may be a wearable device, for example, a smart watch, a smart glass or a head mounted display (HMD), which is able to exchange data with the mobile terminal 100 (or otherwise cooperate with the mobile terminal 100). The short-range communication module 114 may sense or recognize the wearable device, and permit communication between the wearable device and the mobile terminal 100. In addition, when the sensed wearable device is a device which is authenticated to communicate with the mobile terminal 100, the controller 180, for example, may cause transmission of data processed in the mobile terminal 100 to the wearable device via the short-range communication module 114. Hence, a user of the wearable device may use the data processed in the mobile terminal 100 on the wearable device. For example, when a call is received in the mobile terminal 100, the user may answer the call using the wearable device. Also, when a message is received in the mobile terminal 100, the user can check the received message using the wearable device.

The location information module 115 is generally configured to detect, calculate, derive or otherwise identify a position of the mobile terminal. As an example, the location information module 115 includes a Global Position System (GPS) module, a Wi-Fi module, or both. If desired, the location information module 115 may alternatively or additionally function with any of the other modules of the wireless communication unit 110 to obtain data related to the position of the mobile terminal. As one example, when the mobile terminal uses a GPS module, a position of the mobile terminal may be acquired using a signal sent from a GPS satellite. As another example, when the mobile terminal uses the Wi-Fi module, a position of the mobile terminal can be acquired based on information related to a wireless access point (AP) which transmits or receives a wireless signal to or from the Wi-Fi module.

The input unit 120 may be configured to permit various types of input to the mobile terminal 120. Examples of such input include audio, image, video, data, and user input. Image and video input is often obtained using one or more cameras 121. Such cameras 121 may process image frames of still pictures or video obtained by image sensors in a video or image capture mode. The processed image frames can be displayed on the display unit 151 or stored in memory 170. In some cases, the cameras 121 may be arranged in a matrix configuration to permit a plurality of images having various angles or focal points to be input to the mobile terminal 100. As another example, the cameras 121 may be located in a stereoscopic arrangement to acquire left and right images for implementing a stereoscopic image.

The microphone 122 is generally implemented to permit audio input to the mobile terminal 100. The audio input can be processed in various manners according to a function being executed in the mobile terminal 100. If desired, the microphone 122 may include assorted noise removing algorithms to remove unwanted noise generated in the course of receiving the external audio.

The user input unit 123 is a component that permits input by a user. Such user input may enable the controller 180 to control operation of the mobile terminal 100. The user input unit 123 may include one or more of a mechanical input element (for example, a key, a button located on a front and/or rear surface or a side surface of the mobile terminal 100, a dome switch, a jog wheel, a jog switch, and the like), or a touch-sensitive input, among others. As one example, the touch-sensitive input may be a virtual key or a soft key, which is displayed on a touch screen through software processing, or a touch key which is located on the mobile terminal at a location that is other than the touch screen. On the other hand, the virtual key or the visual key may be displayed on the touch screen in various shapes, for example, graphic, text, icon, video, or a combination thereof.

The sensing unit 140 is generally configured to sense one or more of internal information of the mobile terminal, surrounding environment information of the mobile terminal, user information, or the like. The controller 180 generally cooperates with the sending unit 140 to control operation of the mobile terminal 100 or execute data processing, a function or an operation associated with an application program installed in the mobile terminal based on the sensing provided by the sensing unit 140. The sensing unit 140 may be implemented using any of a variety of sensors, some of which will now be described in more detail.

The proximity sensor 141 may include a sensor to sense presence or absence of an object approaching a surface, or an object located near a surface, by using an electromagnetic field, infrared rays, or the like without a mechanical contact. The proximity sensor 141 may be arranged at an inner region of the mobile terminal covered by the touch screen, or near the touch screen.

The proximity sensor 141, for example, may include any of a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and the like. When the touch screen is implemented as a capacitance type, the proximity sensor 141 can sense proximity of a pointer relative to the touch screen by changes of an electromagnetic field, which is responsive to an approach of an object with conductivity. In this instance, the touch screen (touch sensor) may also be categorized as a proximity sensor.

The term "proximity touch" will often be referred to herein to denote the scenario in which a pointer is positioned to be proximate to the touch screen without contacting the touch screen. The term "contact touch" will often be referred to herein to denote the scenario in which a pointer makes physical contact with the touch screen. For the position corresponding to the proximity touch of the pointer relative to the touch screen, such position will correspond to a position where the pointer is perpendicular to the touch screen. The proximity sensor 141 may sense proximity touch, and proximity touch patterns (for example, distance, direction, speed, time, position, moving status, and the like).

In general, controller 180 processes data corresponding to proximity touches and proximity touch patterns sensed by the proximity sensor 141, and cause output of visual information on the touch screen. In addition, the controller 180 can control the mobile terminal 100 to execute different operations or process different data according to whether a touch with respect to a point on the touch screen is either a proximity touch or a contact touch.

A touch sensor can sense a touch applied to the touch screen, such as display unit 151, using any of a variety of touch methods. Examples of such touch methods include a resistive type, a capacitive type, an infrared type, and a magnetic field type, among others.

As one example, the touch sensor may be configured to convert changes of pressure applied to a specific part of the display unit 151, or convert capacitance occurring at a specific part of the display unit 151, into electric input signals. The touch sensor may also be configured to sense not only a touched position and a touched area, but also touch pressure and/or touch capacitance. A touch object is generally used to apply a touch input to the touch sensor. Examples of typical touch objects include a finger, a touch pen, a stylus pen, a pointer, or the like.

When a touch input is sensed by a touch sensor, corresponding signals may be transmitted to a touch controller. The touch controller may process the received signals, and then transmit corresponding data to the controller 180. Accordingly, the controller 180 may sense which region of the display unit 151 has been touched. Here, the touch controller may be a component separate from the controller 180, the controller 180, and combinations thereof.

In some embodiments, the controller 180 may execute the same or different controls according to a type of touch object that touches the touch screen or a touch key provided in addition to the touch screen. Whether to execute the same or different control according to the object which provides a touch input may be decided based on a current operating state of the mobile terminal 100 or a currently executed application program, for example.

The touch sensor and the proximity sensor may be implemented individually, or in combination, to sense various types of touches. Such touches includes a short (or tap) touch, a long touch, a multi-touch, a drag touch, a flick touch, a pinch-in touch, a pinch-out touch, a swipe touch, a hovering touch, and the like.

If desired, an ultrasonic sensor may be implemented to recognize position information relating to a touch object using ultrasonic waves. The controller 180, for example, may calculate a position of a wave generation source based on information sensed by an illumination sensor and a plurality of ultrasonic sensors. Since light is much faster than ultrasonic waves, the time for which the light reaches the optical sensor is much shorter than the time for which the ultrasonic wave reaches the ultrasonic sensor. The position of the wave generation source may be calculated using this fact. For instance, the position of the wave generation source may be calculated using the time difference from the time that the ultrasonic wave reaches the sensor based on the light as a reference signal.

The camera 121 typically includes at least one a camera sensor (CCD, CMOS etc.), a photo sensor (or image sensors), and a laser sensor.

Implementing the camera 121 with a laser sensor may allow detection of a touch of a physical object with respect to a 3D stereoscopic image. The photo sensor may be laminated on, or overlapped with, the display device. The photo sensor may be configured to scan movement of the physical object in proximity to the touch screen. In more detail, the photo sensor may include photo diodes and transistors at rows and columns to scan content received at the photo sensor using an electrical signal which changes according to the quantity of applied light. Namely, the photo sensor may calculate the coordinates of the physical object according to variation of light to thus obtain position information of the physical object.

The display unit 151 is generally configured to output information processed in the mobile terminal 100. For example, the display unit 151 may display execution screen information of an application program executing at the mobile terminal 100 or user interface (UI) and graphic user interface (GUI) information in response to the execution screen information.

In some embodiments, the display unit 151 may be implemented as a stereoscopic display unit for displaying stereoscopic images. A typical stereoscopic display unit may employ a stereoscopic display scheme such as a stereoscopic scheme (a glass scheme), an auto-stereoscopic scheme (glassless scheme), a projection scheme (holographic scheme), or the like.

The audio output module 152 is generally configured to output audio data. Such audio data may be obtained from any of a number of different sources, such that the audio data may be received from the wireless communication unit 110 or may have been stored in the memory 170. The audio data may be output during modes such as a signal reception mode, a call mode, a record mode, a voice recognition mode, a broadcast reception mode, and the like. The audio output module 152 can provide audible output related to a particular function (e.g., a call signal reception sound, a message reception sound, etc.) performed by the mobile terminal 100. The audio output module 152 may also be implemented as a receiver, a speaker, a buzzer, or the like.

A haptic module 153 can be configured to generate various tactile effects that a user feels, perceive, or otherwise experience. A typical example of a tactile effect generated by the haptic module 153 is vibration. The strength, pattern and the like of the vibration generated by the haptic module 153 can be controlled by user selection or setting by the controller. For example, the haptic module 153 may output different vibrations in a combining manner or a sequential manner.

Besides vibration, the haptic module 153 can generate various other tactile effects, including an effect by stimulation such as a pin arrangement vertically moving to contact skin, a spray force or suction force of air through a jet orifice or a suction opening, a touch to the skin, a contact of an electrode, electrostatic force, an effect by reproducing the sense of cold and warmth using an element that can absorb or generate heat, and the like.

The haptic module 153 can also be implemented to allow the user to feel a tactile effect through a muscle sensation such as the user's fingers or arm, as well as transferring the tactile effect through direct contact. Two or more haptic modules 153 may be provided according to the particular configuration of the mobile terminal 100.

An optical output module 154 can output a signal for indicating an event generation using light of a light source. Examples of events generated in the mobile terminal 100 may include message reception, call signal reception, a missed call, an alarm, a schedule notice, an email reception, information reception through an application, and the like.

A signal output by the optical output module 154 may be implemented so the mobile terminal emits monochromatic light or light with a plurality of colors. The signal output may be terminated as the mobile terminal senses that a user has checked the generated event, for example.

The interface unit 160 serves as an interface for external devices to be connected with the mobile terminal 100. For example, the interface unit 160 can receive data transmitted from an external device, receive power to transfer to elements and components within the mobile terminal 100, or transmit internal data of the mobile terminal 100 to such external device. The interface unit 160 may include wired or wireless headset ports, external power supply ports, wired or wireless data ports, memory card ports, ports for connecting a device having an identification module, audio input/output (I/O) ports, video I/O ports, earphone ports, or the like.

The identification module may be a chip that stores various information for authenticating authority of using the mobile terminal 100 and may include a user identity module (UIM), a subscriber identity module (SIM), a universal subscriber identity module (USIM), and the like. In addition, the device having the identification module (also referred to herein as an "identifying device") may take the form of a smart card. Accordingly, the identifying device can be connected with the terminal 100 via the interface unit 160.

When the mobile terminal 100 is connected with an external cradle, the interface unit 160 can serve as a passage to allow power from the cradle to be supplied to the mobile terminal 100 or may serve as a passage to allow various command signals input by the user from the cradle to be transferred to the mobile terminal there through. Various command signals or power input from the cradle may operate as signals for recognizing that the mobile terminal is properly mounted on the cradle.

The memory 170 can store programs to support operations of the controller 180 and store input/output data (for example, phonebook, messages, still images, videos, etc.). The memory 170 may store data related to various patterns of vibrations and audio which are output in response to touch inputs on the touch screen.

The memory 170 may include one or more types of storage mediums including a Flash memory, a hard disk, a solid state disk, a silicon disk, a multimedia card micro type, a card-type memory (e.g., SD or DX memory, etc.), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, an optical disk, and the like. The mobile terminal 100 may also be operated in relation to a network storage device that performs the storage function of the memory 170 over a network, such as the Internet.

The controller 180 may typically control the general operations of the mobile terminal 100. For example, the controller 180 may set or release a lock state for restricting a user from inputting a control command with respect to applications when a status of the mobile terminal meets a preset condition.

The controller 180 can also perform the controlling and processing associated with voice calls, data communications, video calls, and the like, or perform pattern recognition processing to recognize a handwriting input or a picture drawing input performed on the touch screen as characters or images, respectively. In addition, the controller 180 can control one or a combination of those components in order to implement various exemplary embodiments disclosed herein.

The power supply unit 190 receives external power or provide internal power and supply the appropriate power required for operating respective elements and components included in the mobile terminal 100. The power supply unit 190 may include a battery, which is typically rechargeable or be detachably coupled to the terminal body for charging.

The power supply unit 190 may include a connection port. The connection port may be configured as one example of the interface unit 160 to which an external charger for supplying power to recharge the battery is electrically connected.

As another example, the power supply unit 190 may be configured to recharge the battery in a wireless manner without use of the connection port. In this example, the power supply unit 190 can receive power, transferred from an external wireless power transmitter, using at least one of an inductive coupling method which is based on magnetic induction or a magnetic resonance coupling method which is based on electromagnetic resonance.

Various embodiments described herein may be implemented in a computer-readable medium, a machine-readable medium, or similar medium using, for example, software, hardware, or any combination thereof.

Referring now to FIGS. 1B and 1C, the mobile terminal 100 is described with reference to a bar-type terminal body. However, the mobile terminal 100 may alternatively be implemented in any of a variety of different configurations. Examples of such configurations include watch-type, clip-type, glasses-type, or as a folder-type, flip-type, slide-type, swing-type, and swivel-type in which two and more bodies are combined with each other in a relatively movable manner, and combinations thereof. Discussion herein will often relate to a particular type of mobile terminal (for example, bar-type, watch-type, glasses-type, and the like). However, such teachings with regard to a particular type of mobile terminal will generally apply to other types of mobile terminals as well.

The mobile terminal 100 will generally include a case (for example, frame, housing, cover, and the like) forming the appearance of the terminal. In this embodiment, the case is formed using a front case 101 and a rear case 102. Various electronic components are incorporated into a space formed between the front case 101 and the rear case 102. At least one middle case may be additionally positioned between the front case 101 and the rear case 102.

The display unit 151 is shown located on the front side of the terminal body to output information. As illustrated, a window 151a of the display unit 151 may be mounted to the front case 101 to form the front surface of the terminal body together with the front case 101.

In some embodiments, electronic components may also be mounted to the rear case 102. Examples of such electronic components include a detachable battery 191, an identification module, a memory card, and the like. Rear cover 103 is shown covering the electronic components, and this cover may be detachably coupled to the rear case 102. Therefore, when the rear cover 103 is detached from the rear case 102, the electronic components mounted to the rear case 102 are externally exposed.

As illustrated, when the rear cover 103 is coupled to the rear case 102, a side surface of the rear case 102 is partially exposed. In some cases, upon the coupling, the rear case 102 may also be completely shielded by the rear cover 103. In some embodiments, the rear cover 103 may include an opening for externally exposing a camera 121b or an audio output module 152b.

The cases 101, 102, 103 may be formed by injection-molding synthetic resin or may be formed of a metal, for example, stainless steel (STS), aluminum (Al), titanium (Ti), or the like.

As an alternative to the example in which the plurality of cases form an inner space for accommodating components, the mobile terminal 100 may be configured such that one case forms the inner space. In this example, a mobile terminal 100 having a uni-body is formed so synthetic resin or metal extends from a side surface to a rear surface.

If desired, the mobile terminal 100 may include a waterproofing unit (not shown) for preventing introduction of water into the terminal body. For example, the waterproofing unit may include a waterproofing member which is located between the window 151a and the front case 101, between the front case 101 and the rear case 102, or between the rear case 102 and the rear cover 103, to hermetically seal an inner space when those cases are coupled.

FIGS. 1B and 1C depict certain components as arranged on the mobile terminal. However, it is to be understood that alternative arrangements are possible and within the teachings of the instant invention. Some components may be omitted or rearranged. For example, the first manipulation unit 123a may be located on another surface of the terminal body, and the second audio output module 152b may be located on the side surface of the terminal body.

The display unit 151 outputs information processed in the mobile terminal 100. The display unit 151 may be implemented using one or more suitable display devices. Examples of such suitable display devices include a liquid crystal display (LCD), a thin film transistor-liquid crystal display (TFT-LCD), an organic light emitting diode (OLED), a flexible display, a 3-dimensional (3D) display, an e-ink display, and combinations thereof.

The display unit 151 may be implemented using two display devices, which can implement the same or different display technology. For instance, a plurality of the display units 151 may be arranged on one side, either spaced apart from each other, or these devices may be integrated, or these devices may be arranged on different surfaces.

The display unit 151 may also include a touch sensor which senses a touch input received at the display unit. When a touch is input to the display unit 151, the touch sensor may be configured to sense this touch and the controller 180, for example, may generate a control command or other signal corresponding to the touch. The content which is input in the touching manner may be a text or numerical value, or a menu item which can be indicated or designated in various modes.

The touch sensor may be configured in a form of a film having a touch pattern, disposed between the window 151a and a display on a rear surface of the window 151a, or a metal wire which is patterned directly on the rear surface of the window 151a. Alternatively, the touch sensor may be integrally formed with the display. For example, the touch sensor may be disposed on a substrate of the display or within the display.

The display unit 151 may also form a touch screen together with the touch sensor. Here, the touch screen may serve as the user input unit 123 (see FIG. 1A). Therefore, the touch screen may replace at least some of the functions of the first manipulation unit 123a. The first audio output module 152a may be implemented in the form of a speaker to output voice audio, alarm sounds, multimedia audio reproduction, and the like.

The window 151a of the display unit 151 will typically include an aperture to permit audio generated by the first audio output module 152a to pass. One alternative is to allow audio to be released along an assembly gap between the structural bodies (for example, a gap between the window 151a and the front case 101). In this instance, a hole independently formed to output audio sounds may not be seen or is otherwise hidden in terms of appearance, thereby further simplifying the appearance and manufacturing of the mobile terminal 100.

The optical output module 154 can be configured to output light for indicating an event generation. Examples of such events include a message reception, a call signal reception, a missed call, an alarm, a schedule notice, an email reception, information reception through an application, and the like. When a user has checked a generated event, the controller can control the optical output unit 154 to stop the light output.

The first camera 121a can process image frames such as still or moving images obtained by the image sensor in a capture mode or a video call mode. The processed image frames can then be displayed on the display unit 151 or stored in the memory 170.

The first and second manipulation units 123a and 123b are examples of the user input unit 123, which may be manipulated by a user to provide input to the mobile terminal 100. The first and second manipulation units 123a and 123b may also be commonly referred to as a manipulating portion, and may employ any tactile method that allows the user to perform manipulation such as touch, push, scroll, or the like. The first and second manipulation units 123a and 123b may also employ any non-tactile method that allows the user to perform manipulation such as proximity touch, hovering, or the like.

FIG. 1B illustrates the first manipulation unit 123a as a touch key, but possible alternatives include a mechanical key, a push key, a touch key, and combinations thereof.

Input received at the first and second manipulation units 123a and 123b may be used in various ways. For example, the first manipulation unit 123a may be used by the user to provide an input to a menu, home key, cancel, search, or the like, and the second manipulation unit 123b may be used by the user to provide an input to control a volume level being output from the first or second audio output modules 152a or 152b, to switch to a touch recognition mode of the display unit 151, or the like.

As another example of the user input unit 123, a rear input unit (not shown) may be located on the rear surface of the terminal body. The rear input unit can be manipulated by a user to provide input to the mobile terminal 100. The input may be used in a variety of different ways. For example, the rear input unit may be used by the user to provide an input for power on/off, start, end, scroll, control volume level being output from the first or second audio output modules 152a or 152b, switch to a touch recognition mode of the display unit 151, and the like. The rear input unit may be configured to permit touch input, a push input, or combinations thereof.

The rear input unit may be located to overlap the display unit 151 of the front side in a thickness direction of the terminal body. As one example, the rear input unit may be located on an upper end portion of the rear side of the terminal body such that a user can easily manipulate it using a forefinger when the user grabs the terminal body with one hand. Alternatively, the rear input unit can be positioned at most any location of the rear side of the terminal body.

Embodiments that include the rear input unit may implement some or all of the functionality of the first manipulation unit 123a in the rear input unit. As such, in situations where the first manipulation unit 123a is omitted from the front side, the display unit 151 can have a larger screen.

As a further alternative, the mobile terminal 100 may include a finger scan sensor which scans a user's fingerprint. The controller 180 can then use fingerprint information sensed by the finger scan sensor as part of an authentication procedure. The finger scan sensor may also be installed in the display unit 151 or implemented in the user input unit 123.

The microphone 122 is shown located at an end of the mobile terminal 100, but other locations are possible. If desired, multiple microphones may be implemented, with such an arrangement permitting the receiving of stereo sounds.

The interface unit 160 may serve as a path allowing the mobile terminal 100 to interface with external devices. For example, the interface unit 160 may include one or more of a connection terminal for connecting to another device (for example, an earphone, an external speaker, or the like), a port for near field communication (for example, an Infrared Data Association (IrDA) port, a Bluetooth port, a wireless LAN port, and the like), or a power supply terminal for supplying power to the mobile terminal 100. The interface unit 160 may be implemented in the form of a socket for accommodating an external card, such as Subscriber Identification Module (SIM), User Identity Module (UIM), or a memory card for information storage.

The second camera 121b is shown located at the rear side of the terminal body and includes an image capturing direction that is substantially opposite to the image capturing direction of the first camera unit 121a. If desired, second camera 121a may alternatively be located at other locations, or made to be moveable, in order to have a different image capturing direction from that which is shown.

The second camera 121b can include a plurality of lenses arranged along at least one line. The plurality of lenses may also be arranged in a matrix configuration. The cameras may be referred to as an "array camera." When the second camera 121b is implemented as an array camera, images may be captured in various manners using the plurality of lenses and images with better qualities.

As shown in FIG. 1C, a flash 124 is shown adjacent to the second camera 121b. When an image of a subject is captured with the camera 121b, the flash 124 may illuminate the subject.

As shown in FIG. 1B, the second audio output module 152b can be located on the terminal body. The second audio output module 152b may implement stereophonic sound functions in conjunction with the first audio output module 152a, and may be also used for implementing a speaker phone mode for call communication.

At least one antenna for wireless communication may be located on the terminal body. The antenna may be installed in the terminal body or formed by the case. For example, an antenna which configures a part of the broadcast receiving module 111 may be retractable into the terminal body. Alternatively, an antenna may be formed using a film attached to an inner surface of the rear cover 103, or a case that includes a conductive material.

A power supply unit 190 for supplying power to the mobile terminal 100 may include a battery 191, which is mounted in the terminal body or detachably coupled to an outside of the terminal body. The battery 191 may receive power via a power source cable connected to the interface unit 160. Also, the battery 191 can be recharged in a wireless manner using a wireless charger. Wireless charging may be implemented by magnetic induction or electromagnetic resonance.

The rear cover 103 is shown coupled to the rear case 102 for shielding the battery 191, to prevent separation of the battery 191, and to protect the battery 191 from an external impact or from foreign material. When the battery 191 is detachable from the terminal body, the rear case 103 may be detachably coupled to the rear case 102.

An accessory for protecting an appearance or assisting or extending the functions of the mobile terminal 100 can also be provided on the mobile terminal 100. As one example of an accessory, a cover or pouch for covering or accommodating at least one surface of the mobile terminal 100 may be provided. The cover or pouch may cooperate with the display unit 151 to extend the function of the mobile terminal 100. Another example of the accessory is a touch pen for assisting or extending a touch input to a touch screen.

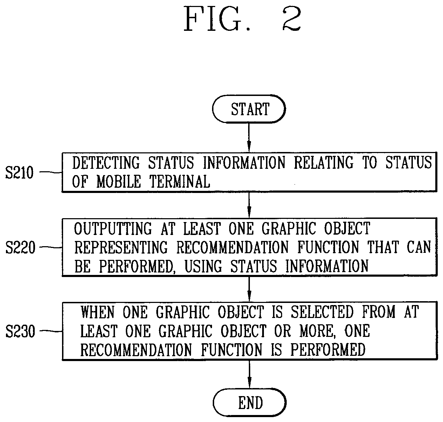

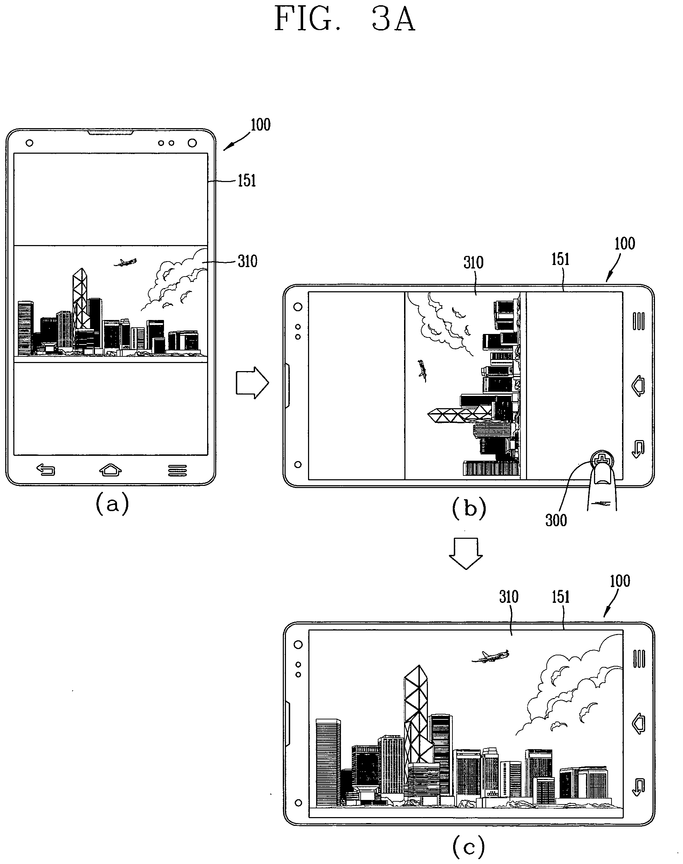

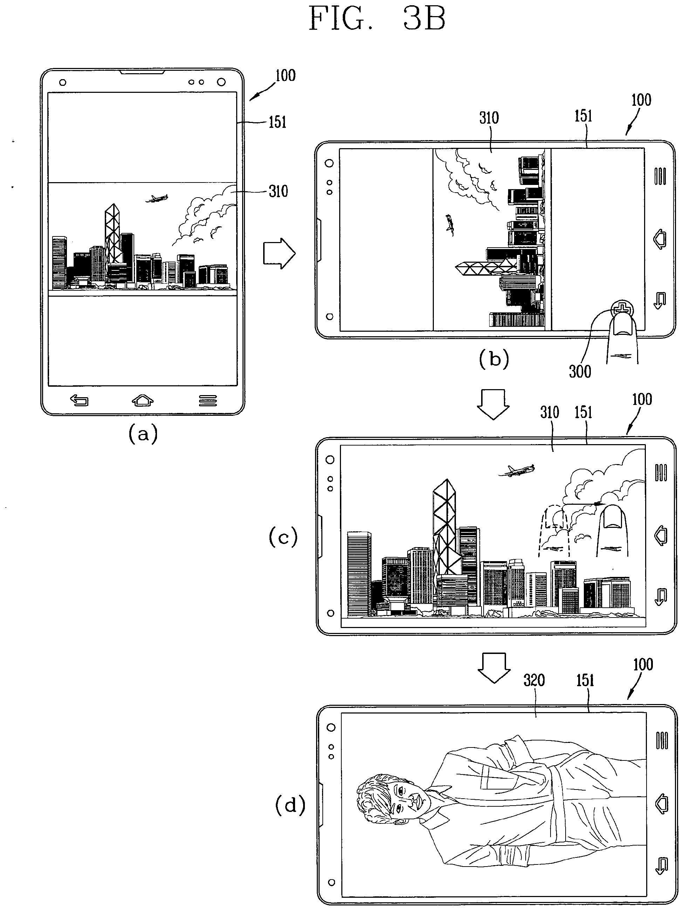

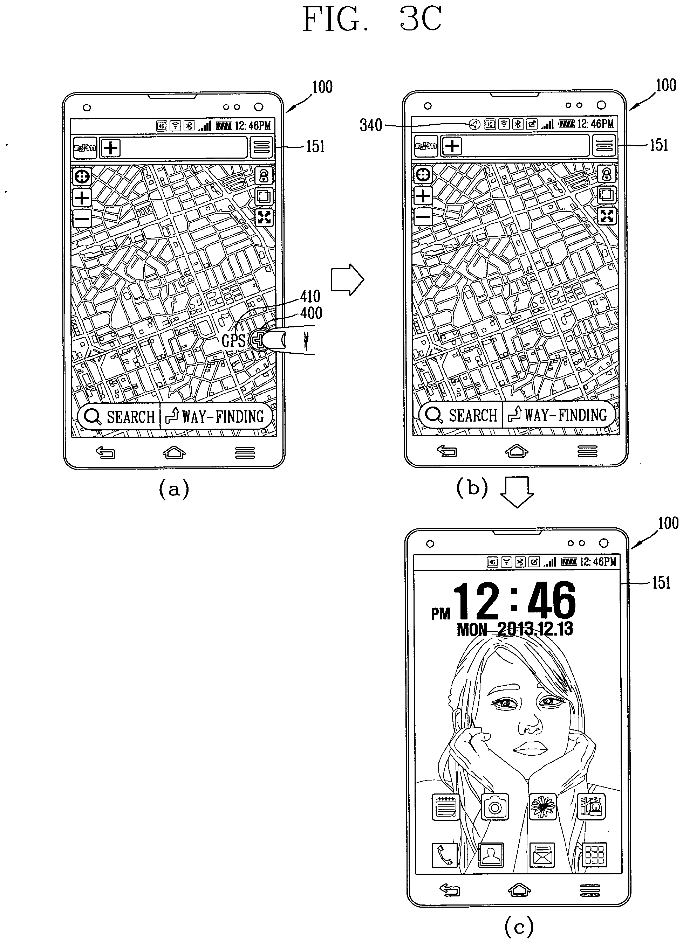

A method is described below in which based on status information relating to the mobile terminal, at least one recommendation function is provided in the mobile terminal. In particular, FIG. 2 is a flowchart illustrating the method in which based on the status information on the mobile terminal, at least one recommendation function is provided in the mobile terminal, and FIG. 3 includes diagrams illustrating the control method in FIG. 2.

As shown in FIG. 2, the method includes detecting the status information relating to a status of the mobile terminal proceeds (S210). In particular, the controller 180 detects the status information relating to the status of the mobile terminal in real time or in predetermined time intervals.

The information includes a list of applications that currently run on the mobile terminal, information on a function executed in the application that currently runs on the mobile terminal, environment-setting information on the mobile terminal, status information on the user of the mobile terminal, and so on. The environment-setting information includes various pieces of information relating to a basic setting of the mobile terminal, such as status information on wireless communication (for example, Wi-Fi, 3G, 4G, and the like), status information on a possibility of screen rotation, adjustment information on screen brightness, and the like.

The controller 180 uses pieces of information stored in the memory unit 170 in order to detect the status information. Information on an application that can be executed on the mobile terminal, information on a function that is currently executed, and the like are temporarily or semi-permanently in the memory unit 170.

Then, the controller 180 displays at least one graphic object representing the recommendation function that can be executed along with a function that is currently executed using the detected status information proceeds (S220). The controller 180 detects the function that is currently executed on the mobile terminal, using the detected status information, and displays at least one graphic object representing at least one recommendation function that can be executed along with the function that is currently executed.

Further, corresponding information relating to at least one recommendation function that already corresponds to the status information is stored in the memory unit 170. In addition, the corresponding information in which an information combination associated with at least two pieces of status information among the pieces of status information corresponds to at least one recommendation function is stored in the memory unit 170. For example, in the corresponding information, an image that is captured in a landscape format while an application in which outputting of the image is possible is executed on the mobile terminal corresponds to a sideways-screen viewing function in which screen information is output in the landscape format to the display unit 151. Such corresponding information is stored in the memory unit 170.

If the detected status information is in accordance with the corresponding information stored in the memory unit 170, the controller 180 outputs the graphic object representing the corresponding function.

In addition, at least one recommendation function includes a function that is necessary to be executed along with a function currently executed, a function that is frequently executed along with the function currently executed, a function that is recommended as a function executed along with the function that is currently executed, and so on.

For example, when the display unit 151 of the mobile terminal is horizontally inclined with the longer side of the display unit 151 at the top, the application in which the outputting of the image is possible is executed on the mobile terminal. In addition, when a specific image (for example, the image that is captured in a landscape format) is output, the controller 180 displays a graphic object representing the sideways-screen viewing function on one region of the display unit 151. The sideways-screen viewing function is a function of displaying the screen information being displayed on the display unit 151 in a form suitable for a sideways screen. Further, if the specific image is displayed on the display unit 151, the sideways-screen viewing function is a function that is recommended as the function that is executed together.

In addition, the at least one recommendation function is a function the automatic executing of which is set to be limited. For example, when the executing of the sideways-screen viewing function is limited, the controller 180 recommends the sideways-screen viewing function, based on the status information. Thus, according to an embodiment of the present invention, based on the status information on the user, the function is provided in which a setting that, because the automatic executing of the function is limited, prevents the user from normally using mobile terminal is changed without entering a separate setting.

Further, according to an embodiment of the present invention, at least one recommendation function that already corresponds to the status information is not immediately executed, and a graphic object representing the at least one recommendation function is output. Thus, according to an embodiment of the present invention, the recommendation function that the user does not want is prevented from being executed, and at the same time the recommendation function is executed without entering the separate setting screen.

Descriptive information on the function linked to the graphic object is displayed in the vicinity of the graphic object. For example, if GPS function is linked to the graphic object, GPS information is displayed in the vicinity of the graphic object.

The graphic object is displayed on one region of the display unit 151. For example, the graphic object is displayed an empty region of the display unit 151, on which screen information is not displayed, or is displayed a predetermined region. For example, the graphic object is displayed in the vicinity of a finger-touched region of the display unit 151 in order to improve user convenience. In addition, the finger-touched region is a region of the display unit 151 that the user's fingers come into contact with when he/she holds the main body of the mobile terminal in his/her hand. For example, the controller 180 defines the finger-touched region as a region of the display unit 151 on which the last touch is detected.

In addition, the graphic object is moved by a user's touch. For example, the graphic object is moved by a user's drag and drop applied to the graphic object.

Further, the graphic object is moved to a predetermined position. That is, the graphic object is not displayed in a position to which the graphic object is moved by the user's drag and drop, and is moved to a different predetermined position from the position to which the graphic object is moved. For example, if the user moves the graphic object to the center of the display unit 151, the controller 180 does not display the graphic object on the center of the display unit 151, and moves the graphic object to the left or right edge region of the display unit 151.

In addition, when the touch is applied to the graphic object for a predetermined time, the graphic object disappears from the display unit 151. That is, when the touch is not applied to the graphic object for the predetermined time, the controller 180 determines that the function linked to the graphic object is no longer executed and thus does not display the graphic object.

In addition, when the status information on the mobile terminal on which the output of the graphic object is based is changed, the graphic object automatically disappears from the display unit 151. That is, when the status information is changed, the controller 180 does not output on the display unit 151 the graphic object representing the recommendation function so the recommendation function is no longer executed.

In addition, if the graphic object is displayed in the same state, but the function linked to the graphic object is not executed a predetermined number of time, even though the same status information is detected thereafter, the graphic object is not displayed on the display unit 151. That is, the controller 180 determines whether or not the function linked to the graphic object is displayed on the display unit 151, according to the frequency with which the user uses the function.

The user can also provide a setting by his/her selection in such a manner the graphic object that is output based on the status information is not display. In this instance, the controller 180 does not display the graphic object representing the recommendation function, based on the status information.

According to an embodiment of the present invention, when the at least one graphic object is output, the one recommendation function is executed based on selection of one graphic object from the at least one graphic object or more (S230). When at least one graphic object representing at least one recommendation function is displayed, the user executes the one recommendation function in response to the selection of one graphic object from the at least one graphic object or more.

Further, when different touch types are applied to the graphic object, the controller 180 executes different functions. For example, when a long touch is applied to the graphic object, the graphic object is changed to an editable state, and when a short touch is applied, the function linked to the graphic object is executed.

Only when the current status information is maintained, the controller 180 executes the one executed recommendation function. That is, when the current status information is changed to different status information from the current status information, the controller 180 ends the executed recommendation function. Thus, when the current status information is changed and thus the recommendation function is no longer necessary, the user can automatically use the recommendation function without any separate setting.

Referring to FIG. 3A(a), the application in which the outputting of the image is possible is executed on the mobile terminal 100 according to one embodiment of the present invention. Further, an execution screen of the application in which the outputting of the image is possible is output on the display unit 151. One image 310 among multiple images that are stored in the memory 170 is displayed on the execution screen of the application in which the output of the image is possible.

Further, as illustrated in FIG. 3A(b), the user can horizontally incline the main body 100 of the mobile terminal with the longer side of the main body at the top. Further, in the mobile terminal, the sideways-screen viewing function is not executed that rotates the screen information displayed on the display unit 151 so the screen information is suitable for the sideways screen.

The image 310 that is captured in the landscape format is displayed on the display unit 151. In this instance, the controller 180 detects the status information in which the sideways-screen viewing function that makes the screen information suitable for the current sideways screen is not executed. Further, the controller 180 displays on one region of the display unit 151 a graphic object 300 representing the sideways-screen viewing function.

Further, the controller 180 executes the sideways-screen viewing function in response to the application of the touch to the graphic object 300. For example, as illustrated in FIG. 3A(c), the image 310 that is captured at the landscape format is displayed by the sideways-screen viewing function so the image 310 is suitable for the sideways screen.

Referring to FIG. 3B(a) to 3B(d), the detected status information is changed, and the controller 180 ends the executed recommendation function. For example, referring to FIG. 3B(a) to 3B(c), the sideways-screen viewing function is executed by the user's touch applied to the graphic object 300 representing the sideways-screen viewing function. In this instance, the image 310 that is captured at the landscape format is displayed in a form suitable for the sideways-screen viewing function on the display unit 151.

In this state, based on the user's touch, the controller 180 outputs a different image 320 to the display unit 151 among the multiple images stored in the memory unit 170.Further, if the different image 320 is not an image that is captured at the landscape, the controller 180 detects that the status information is changed. Further, when the status information is changed, the controller 180 ends the executed recommendation information, based on the changed status information.

For example, as illustrated in FIG. 3B(d), the controller 180 ends the sideways-screen viewing function and displays the different image 320 to a state in which before the sideways-screen viewing function is executed. That is, regardless of the main body 100 being horizontally inclined, the different image 320 is output in a portrait format.

As another example, referring to FIGS. 3C(a) to 3C(c), when ending an application being currently executed during executing of recommendation function, the controller 180 ends the recommendation function as well. For example, the user can run an application associated with map information.

Further, the controller 180 determines the status information in which the GPS function is not executed separately from the application associated with the map information. Therefore, the controller 180 displays graphic objects 400 and 410 representing the GPS function.

As illustrated in FIG. 3C(b), when the graphic object 400 or 410 is touched on and thus the GPS function is executed, an image indicating that the GPS function is executed is displayed on one region of the display unit 151. For example, an image 340 is displayed on a status display region on which the information relating to the status of the mobile terminal is displayed.

The user can end the application associated with the map information. Further, when ending the application associated with the map information is ended, the controller 180 ends the executed GPS function as well. Further, as illustrated in FIG. 3C(c), the image 340 indicating that the GPS function is executed disappears from the display unit 151.

The method is described above in which based on the status information, the graphic object representing at least one recommendation function is output and at least one recommendation function is executed in response to the application of the touch to the graphic object. Thus, according to an embodiment of the present invention, the functions that are necessary in the current status of the user's mobile terminal are easily executed without entering a separate function setting screen. This provides the user with convenience.

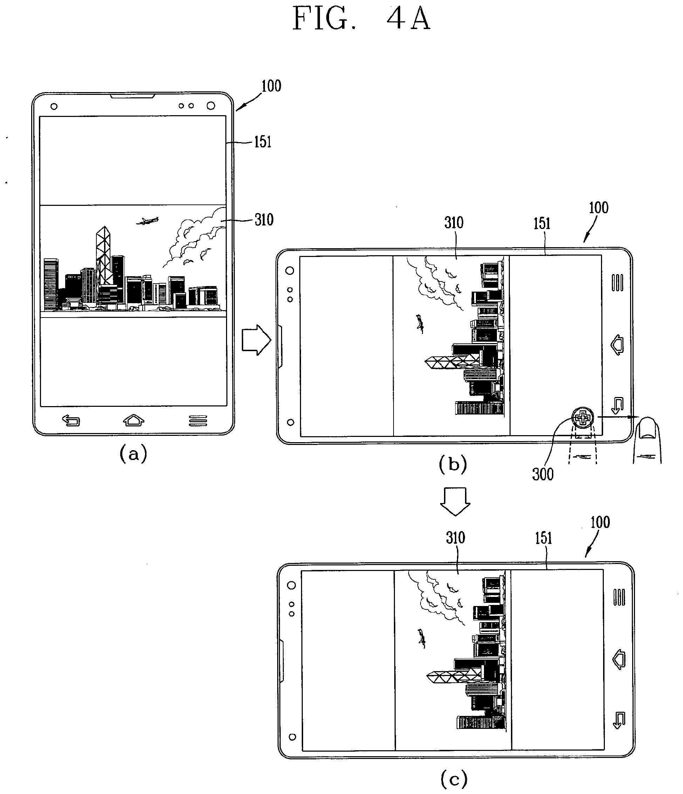

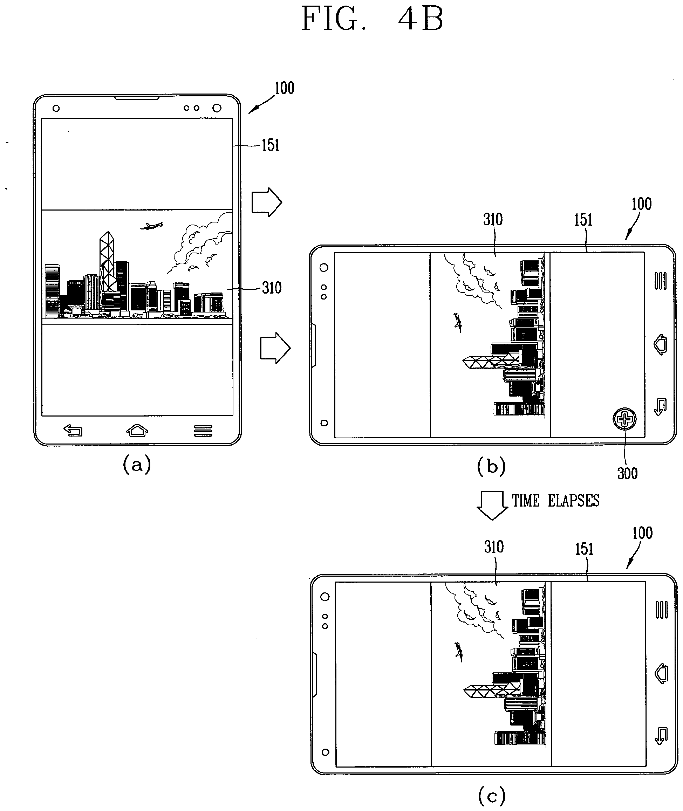

Next, various embodiments are described below in which the graphic object representing at least one recommendation function disappear from the display unit 151. FIG. 4 includes diagrams illustrating the various embodiments where the graphic object representing at least one recommendation function disappears from the display unit.

When a predetermined condition is satisfied based on the status information on the mobile terminal, the graphic object representing at least one recommendation function disappears from the display unit 151. In addition, the predetermined condition includes when a predetermined touch is applied to the graphic object, when the function represented by the graphic object finishes, when a predetermined time elapses, how frequently the user uses the graphic object and so on. The predetermined condition is set at the time of manufacturing, or set by a user's selection.

For example, referring to FIG. 4A(a) and 4A(b), the controller 180 detects the status information on a position of the mobile terminal and the status information in which the image 310 captured in the landscape format is currently displayed on the display unit 151. Further, the controller 180 displays on one region of the display unit 151 the graphic object representing the sideways-screen viewing function.

In addition, the user can apply a predetermined-type touch to the graphic object 300. In addition, the predetermined-type touch includes flicking, the long touch, and the like. For example, as illustrated in FIG. 4A(b), the user can apply to the graphic object 300 a flicking input toward the outside of a display region of the display unit 151.

When the flicking input is applied, the controller 180 does not display the graphic object 300 on the display unit 151. For example, as illustrated in FIG. 4A(c), the graphic object 300 is not displayed on the display unit 151. In addition, the user can no longer use the graphic object. Also the user can enter the separate setting screen and execute the recommendation function.

As another example, referring to FIGS. 4B(a) to 4B(c), if the touch is not applied to the graphic object 300 for a predetermined time, the graphic object 300 automatically disappears from the display unit 151. Further, if the user's touch is not applied to the graphic object 300 for the predetermined time, the controller 180 determines that the user does not execute the function represented by the graphic object. Therefore, the controller 180 no longer outputs the graphic object 300 on the display unit 151.

As another example, it is determined whether or not the graphic object 300 is output, according to the frequency with which the user uses the graphic object 300. That is, after the graphic object 300 is output based on the status information, the controller 180 does not execute the function represented by the graphic object 300. Further, if the user does not use the function represented by the graphic object 300 output based on the same status information a predetermined number of time, the controller 180 determines that the user does not use the function represented by the graphic object 300. When the same status information is detected after the determination, based on the detected status information, the controller 180 no longer outputs the graphic object 300 that is set to be output.

As another example, when the long touch is applied to the graphic object, the controller 180 displays a deletion image through which the graphic object can be deleted in the vicinity of the graphic object. Further, the user can selectively delete the graphic object 300 or execute the function represented by the graphic object 300.

The various cases are described above in which based on the status information, the graphic object representing at least one recommendation function disappears from the display unit 151. Thus, according to an embodiment of the present invention, if the user does not use the function represented by the graphic object, processing is performed so the graphic object is not displayed. In addition, according to an embodiment of the present invention, when the predetermined condition is satisfied without separate control by the user, the graphic object disappears.

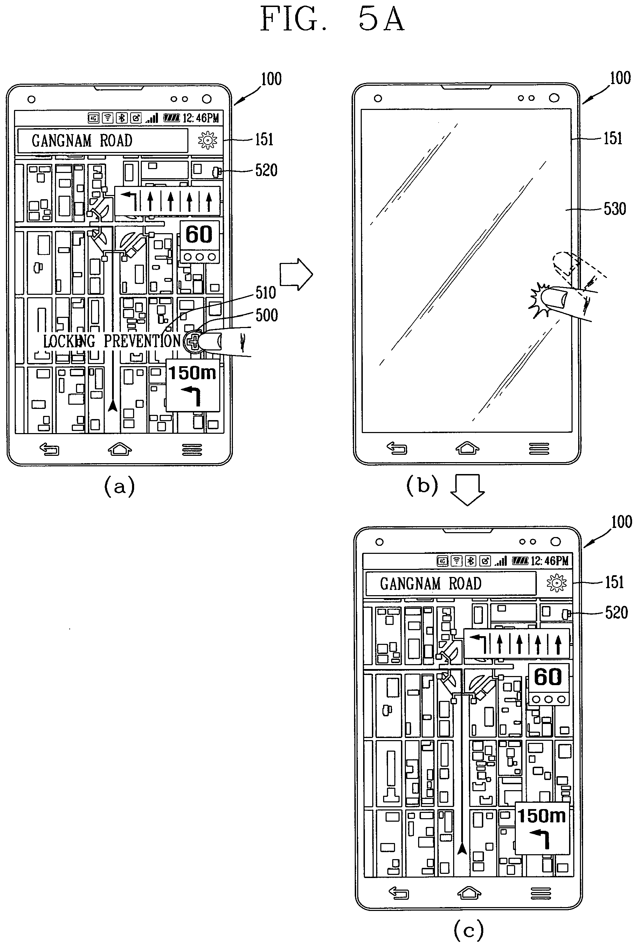

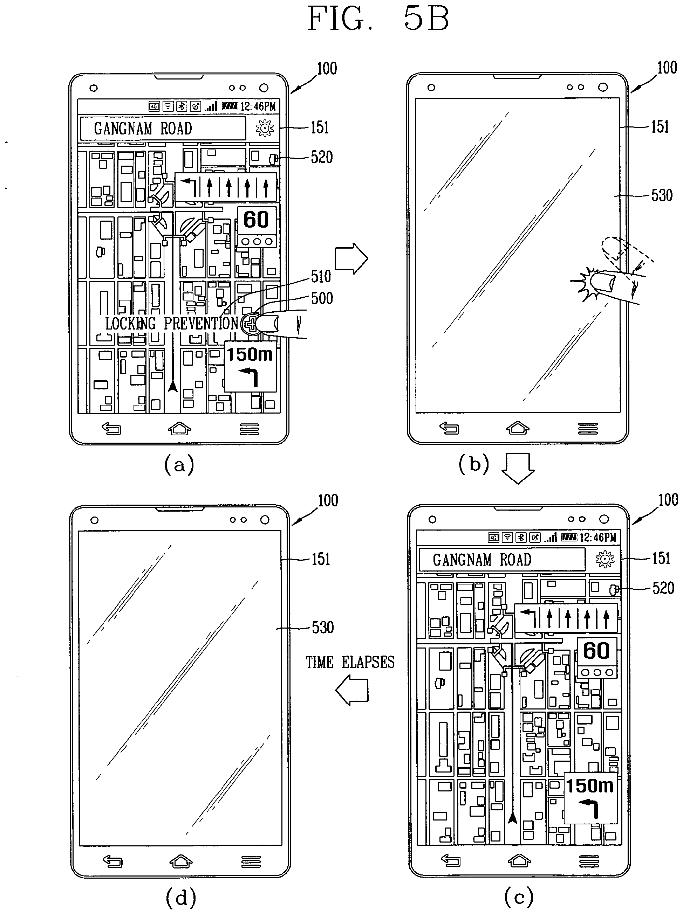

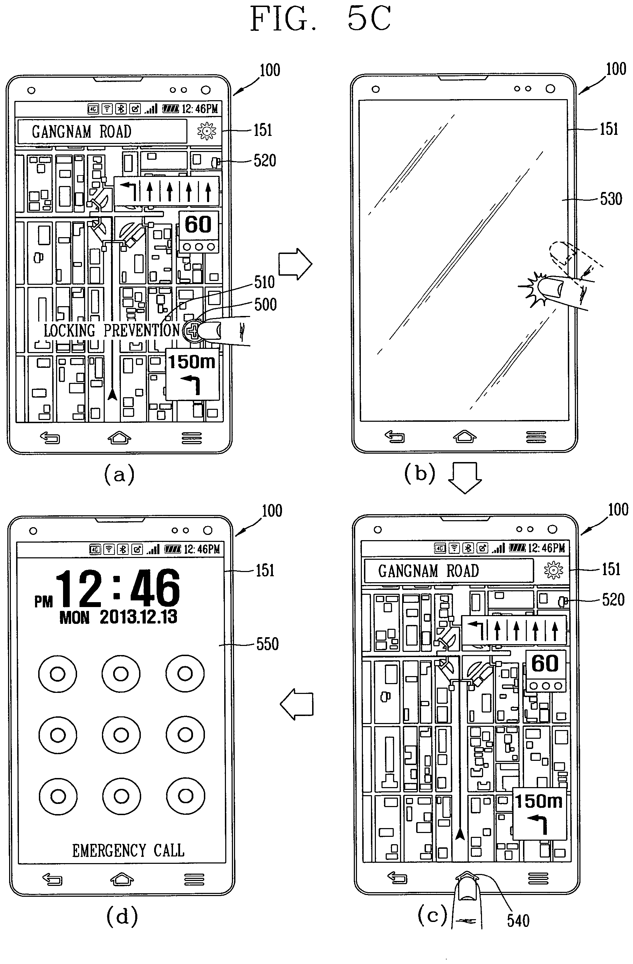

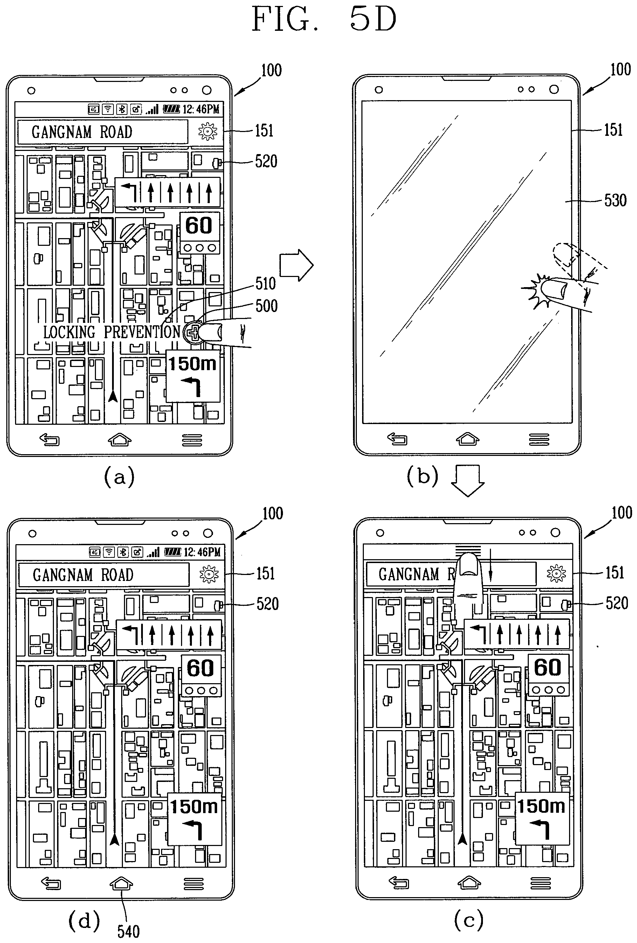

A control method when the recommendation function is executed and then the mobile terminal enters a locked state is described below. FIG. 5 includes diagrams illustrating the control method when the recommendation function is executed in the mobile terminal according to one embodiment of the present invention and then the mobile terminal enters the locked state.

Applications in which a voice output is used, such as an application associated with the map information and an application associated with music playback, can be executed on the mobile terminal. When the applications run in which the voice output is used, the controller 180 determines that the number of times that the display unit 151 is controlled is relatively small and thus turns off the screen of the display unit 151 (that is, enters a state where the screen of the display unit 151 is not illuminated). Further, the mobile terminal enters the locked state in which receiving of the user's control command is limited.

According to an embodiment of the present invention, before the display unit 151 is turned off, a locking prevention function that temporarily suspends the locked state of the mobile terminal is executed. When the locking prevention function is executed, the controller 180 temporarily suspends the locked state although it turns off the screen of the display unit 151.

Further, based on the application of a predetermined touch when the screen is turned off, when turning back on the screen, the controller 180 outputs the execution screen of an application executed before the screen was turned off, instead of displaying a locking screen indicating the locked state.

For example, as illustrated in FIG. 5A(a), a direction-finding application using the map information is executed on the mobile terminal. Further, the controller 180 outputs the execution screen of the application using the map information on the display unit 151. In addition, the controller 180 outputs to one region of the display unit 151 graphic objects 500 and 510 representing the locking prevention function that temporarily suspends the locked state. Further, the user can execute the locking prevention function by applying the touch to the graphic object 500.

Thereafter, as illustrated in FIG. 5A(b), the display unit 151 of the mobile terminal is turned off. In more detail, if the touch is not applied for a predetermined time or if a user's command for turning off display is applied, the display unit 151 is turned off.

When the display unit 151 is turned off, and when a predetermined-type touch is applied, the controller 180 turns on the display unit 151. In addition, the predetermined-type touch includes a touch (for example, a touch known as a "knock-on" or "knock-knock" touch) in which the multiple short touches are successively applied to the display unit 151.

As illustrated in FIG. 5A(c), when the predetermined-type touch is applied, the controller 180 turns on the display unit 151, but doesn't display a lock screen and rather switches the locked state to a suspended state. In addition, an execution screen 520 of the application executed before the display unit 151 is turned off is displayed on the display unit 151.

That is, the controller 180 immediately displays the execution screen 520 of the application on the display unit 151 without entering the locked state of the mobile terminal 100. Also, when a predetermined time elapses after the execution screen of the application is output, the controller 180 turns back off the display unit 151.

For example, as illustrated in FIG. 5B(a)-5B(d), which is similar to FIG. 5A, except the display unit 151 is illustrated as being turned back off. Thus, as shown, when the predetermined-type touch is applied to the display unit 151, the controller 180 temporarily switches the locked state to the suspended state and immediately outputs the execution screen 520 of the application.

If the execution screen of the application is immediately displayed instead of the locking screen, the controller 180 limits the receiving of the control command that is not associated with the executing of the application. That is, based on the status information in which the execution screen of the application is output, the controller 180 can execute the locking prevention function, and when the control command not associated with the execution of the application is applied, the status information is changed and the locking prevention function is ended.

For example, referring to FIG. 5C(a) to 5C(d), the controller 180 outputs a graphic objects 500 and 510, based on the status information and executes the locking prevention function in response to the touch applied to the graphic object 500. Further, the user can apply to the mobile terminal the control command not associated with the execution screen of the application.

For example, the control command not associated with the execution screen of the application includes a control command for ending or canceling the executing of the application, a control command for entering a home screen page, and so on. In addition, the control command for ending or canceling the executing of the application is a touch command to one region of the user input unit. For example, the control command for ending or canceling the executing the application is a command in which a backspace key (an execution canceling function).

According to one embodiment of the present invention, as illustrated in FIG. 5C(c), the user can touch on a home screen page entering button 540 in order to enter the home screen page. Further, when the control command not associated with the execution screen of the application is detected, the controller 180 determines that the status information is changed and thus ends the locking prevention function.

In addition, because the locking prevention function is ended, the controller 180 switches the mobile terminal to the locked state. When the switching to the locked state is made, the controller 180 outputs on the display unit 151 a locking screen 550 indicating the locked state.

That is, according to an embodiment of the present invention, the locking prevention function is temporarily executed only with the status information (for example, execution information on a specific application) on which the locking prevention function is based. Further, when the locking prevention function is executed, the mobile terminal temporarily switches the locked state to the suspended state. In addition, according to an embodiment of the present invention, when the status information is changed, the locking prevention function is immediately ended, and the mobile terminal is switched to the locked state.

As another example, referring to FIG. 5D(a) to 5D(d), instead of the home screen page entering button 540, the user can apply the touch to the status display region on which the information relating to the status of the mobile terminal is displayed. For example, as illustrated in FIG. 5D(a) to 5D(c), the locking prevention function is executed on the mobile terminal.

Further, as illustrated in FIG. 5D(c), the controller 180 detects a drag input applied to the status display region. The drag input is a control command that is not associated with the execution screen of the application. That is, the controller 180 does not execute a function (for example, a function of displaying the status display region on the display unit 151) that is according to the drag input. In addition, as illustrated in FIG. 5D(d), the screen associated with the status display region according to the drag input is not displayed on the display unit 151, and the execution screen of the application continues to be displayed.

The method when based on the status information, the switching to the locked state is made while at least one recommendation function is executed is described above. Thus, according to an embodiment of the present invention, security is maintained although a function in which the switching to the locked state is not made is executed.

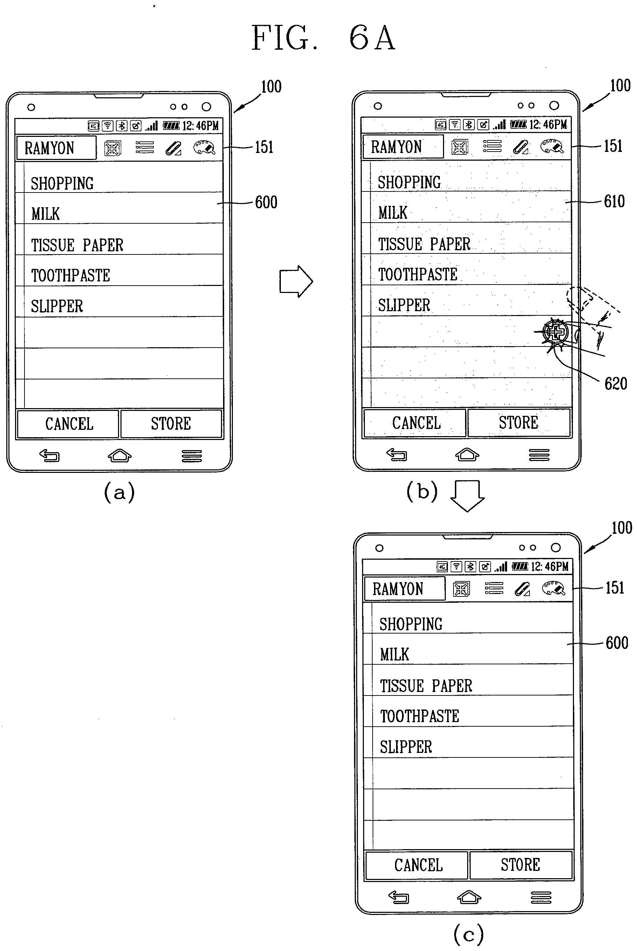

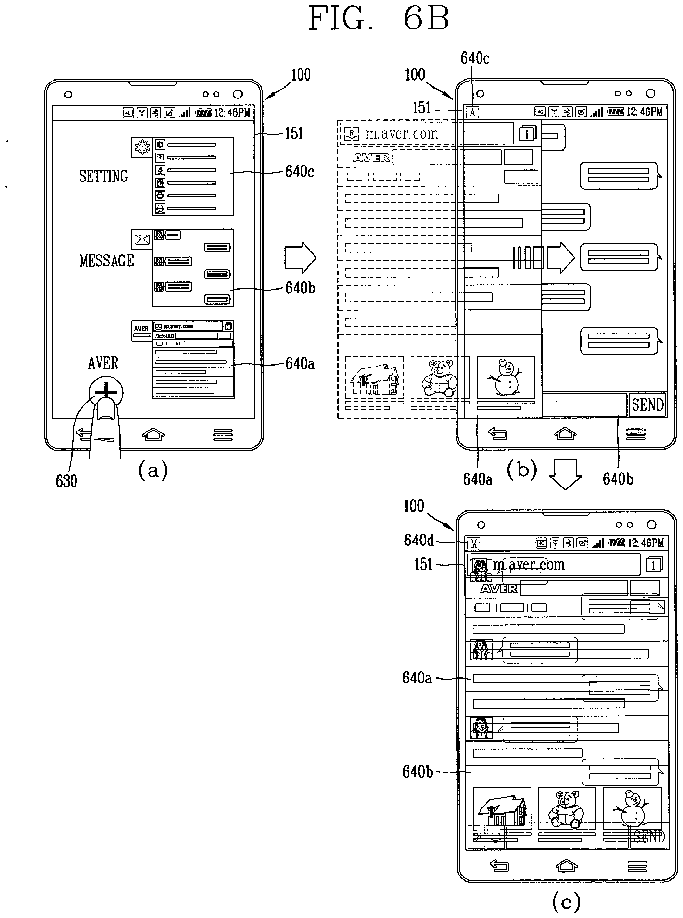

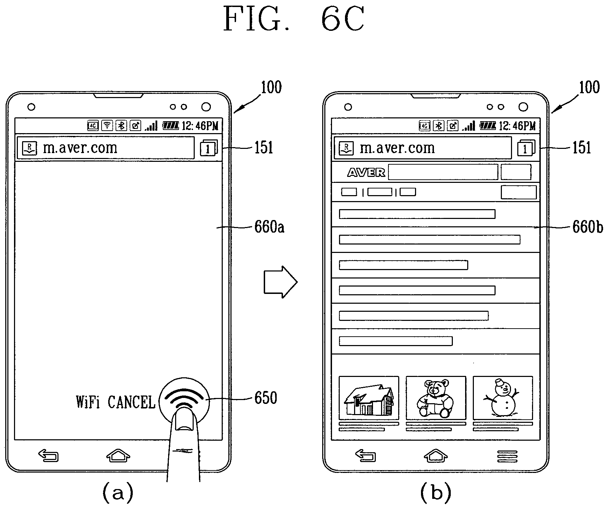

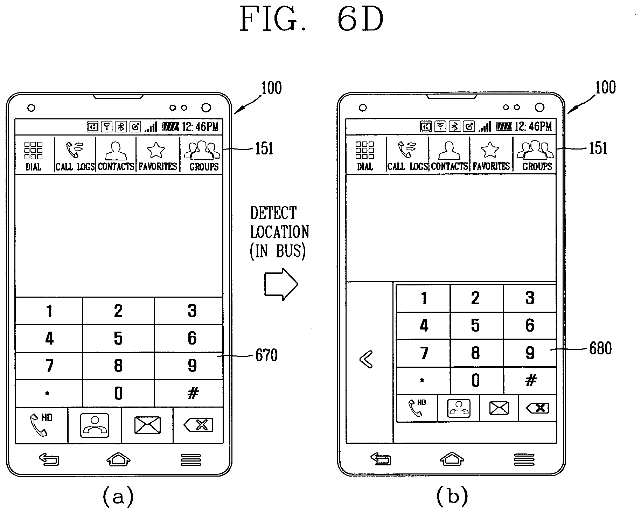

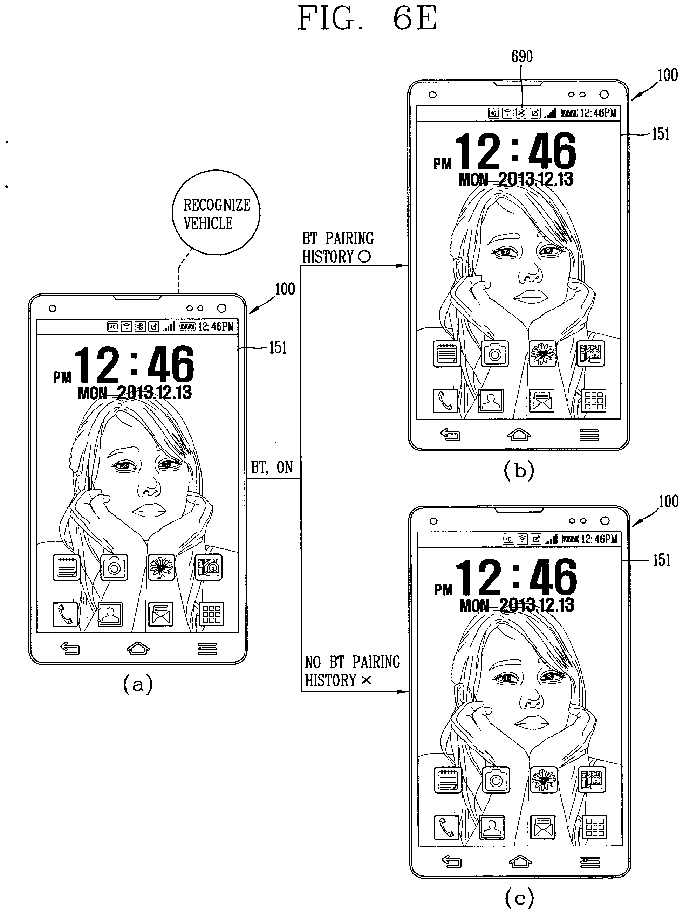

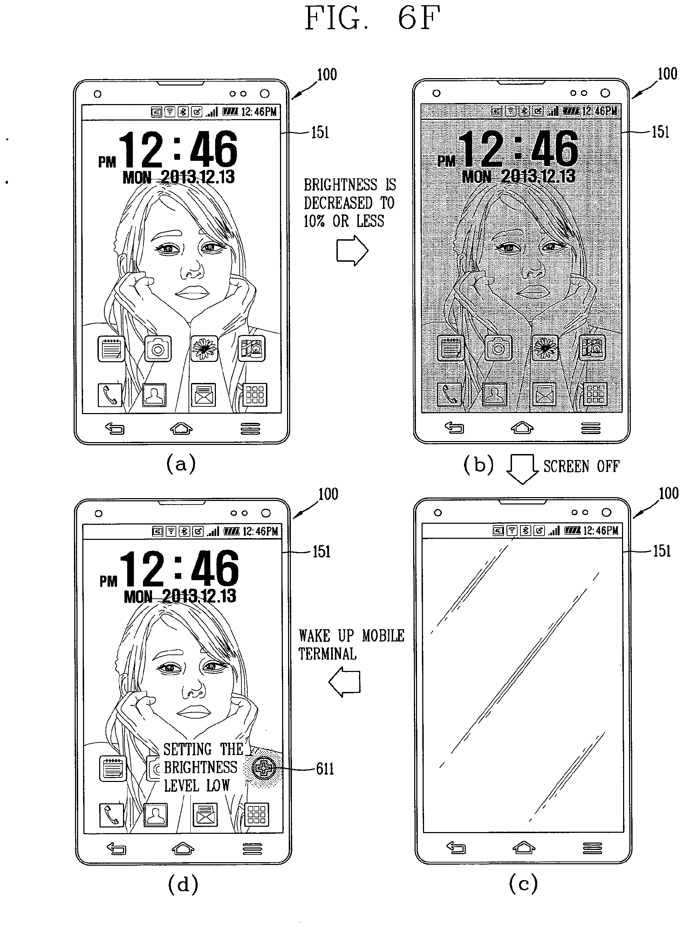

Various methods according to the present invention are described below in which based on the status information, at least one recommendation function is executed. FIG. 6 includes diagrams illustrating the various methods according to the present invention in which at least one recommendation function is executed based on the status information.

The status information that can be detected by the controller 180 includes pieces of information relating to operation of the mobile terminal and the user of the mobile terminal, such as status information relating to the turning-on and turning-off of the screen of the display unit 151, information on an application that is frequently executed, strength information on a wireless communication signal, and current status information on the user.

Based on the status information, the controller 180 outputs the graphic object representing at least one recommendation function. When the status information is changed, the executing of the at least one recommendation function is ended. For example, at least one recommendation function that is executed based on executing of a specific application is ended together when the specific application is ended. Referring FIGS. 6A(a) to 6A(c), an application associated with a memo is executed in the mobile terminal 100 according to one embodiment of the present invention. Further, although the user of the application associated with the memo does not apply the touch to the display unit 151 for a particular time, he/she may want to view the memo information on an execution screen 600 when the display unit 151 is not turned off (or when the display unit 151 is illuminated).

However, if a function of automatically turning off the display unit 151 is executed, when the display unit 151 is turned on, the controller 180 adjusts the illumination of the display unit 151 so the display unit 151 gets dimmer as time goes by. Further, the controller 180 detects the user's control command applied to the display unit 151 within a predetermined time (for example, within five seconds after the display unit 151 is no longer illuminated) after the display unit 151 is no longer illuminated, or when the display unit 151 gets dimmer.

In addition, the user's control command includes a double tap touch and the short touch that are applied to the display unit 151, and an input for turning on the display unit 151 using a user operation unit. When the user's control command is detected, the controller 180 adjusts the illumination of the display unit 151 back to its original state so the display unit 151 gets brighter and brighter. Further, the controller 180 determines the control command as the status information in which the display unit 151 maintains an illuminated state.

In this instance, the controller 180 outputs a graphic object 620 representing a function of preventing automatic turning-off of the display unit 151, in which the display unit 151 maintains the illuminated state. For example, as illustrated in FIG. 6A(b), before the display unit 151 is turned off, the controller 180 outputs the graphic object 620 representing the function of preventing the automatic turning-off of the display unit 151, to at least one portion of an execution screen 610 of the application associated with the memo.

When the graphic object 620 is selected, although the control command is not received for a particular time, the controller 180 keeps the display unit 151 turned on. If an execution screen 600 of the application associated with the memo is not displayed on the display unit 151, the function of prevention the automatic turning-off of the display unit 151 is ended.

As another example in which the recommendation function is executed using the status information, the controller 180 detects information on the application that is frequently executed, among the applications that are currently executed. Further, the execution screen of the frequently-executed application is output so as to slide out of one of both ends of the display unit 151.

For example, based on a user's request, the controller 180 outputs a list of the applications that are frequently executed. In addition, the user's request is a long press against a Home key that is linked to a function of entering the home screen page. Further, the graphic object representing the function that indicates the execution screen of the application is displayed, in a sliding manner, to the vicinity of at least the most frequently executed application, among the applications that are currently executed.

For example, as illustrated in FIG. 6B(a), a list of applications 640a, 640b, and 640c that are currently executed are output on the display unit 151. Further, the controller 180 displays a graphic object 630 representing a sliding function, to the vicinity of the application 640a that is most frequently executed, among the list of the applications 640a, 640b, and 640c.

Further, as illustrated in FIGS. 6B(b) and 6B(c), when the touch is applied to the graphic object 630, the controller 180 displays an execution screen of the application 640a that is frequently executed, so the execution screen of the application 640a slides out of one end of both ends of the display unit 151. In addition, the displaying of the execution screen of the application 640a in the sliding manner means that the execution screen of the application 640a is moved while being superimposed onto at least one portion of the execution screen of the application 640b that is already displayed.

In addition, as another example, the controller 180 detects information relating to a wireless communication status of the mobile terminal. The information on the wireless communication status includes a type of communication established between two entities and signal strength in the communication established between the two entities. Further, the controller 180 outputs a graphic object representing a function in which if the signal strength in the currently established communication is weak, the established communication is canceled and new communication is established over a different means.

For example, as illustrated in FIG. 6C(a), when the signal strength in a currently established Wi-Fi communication is detected as weak while screen information 660a that is obtained by executing a web browser application is displayed, the controller 180 displays a graphic object 650 through which the Wi-Fi communication is canceled and new communication is established over the different means.

Further, when the touch is applied to the graphic object 650, the controller 180 cancels the Wi-Fi communication and establishes predetermined communication (for example, 4G communication). For example, referring to FIG. 6C(b), the controller 180 displays an execution screen 660b of the web browser application on the display unit 151 by canceling the Wi-Fi communication and then establishing the 4G communication.

That is, if the signal strength in a currently-selected wireless communication is weak, thereby delaying the establishing of the wireless communication, the currently-selected wireless communication is immediately canceled and different wireless communication is used.

As another example, the controller 180 detects the status information relating to the current position of the user. For example, as illustrated in FIGS. 6D(a) and 6D(b), the controller 180 determines that the user of the current mobile terminal is in a bus. Further, the presence of the user in the bus is determined with the rocking of the mobile terminal in the bus and GPS information on the bus that runs along a designated route at regular intervals.

When the user is determined as being in the bus, the controller 180 detects this as a state where he/she has difficulty using his/her both hands. Further, the controller 180 outputs to one region of the display unit 151 a graphic object representing a function of changing the existing keyboard 670 to a keyboard 680 that can be used with one hand. In addition, the controller 180 immediately executes the function of changing the existing keyboard 670 to the keyboard 680 that can be used with one hand, without going through the displaying of the graphic object.

When the function of changing the existing keyboard to the keyboard 680 that can be used with one hand is executed, the controller 180, as illustrated in FIG. 6D(b), changes the keyboard 670 displayed on the display unit 151 to the keyboard 680 that can be used with one hand.

When information on the user's position changes again, the keyboard 680 that can be used with one hand is changed back to the keyboard that can be used with both hands. Also, in addition to the status information relating to the position, according to a type of the user's application of the touch, the controller 180 executes the function of changing the existing keyboard to the keyboard 680 that can be used with one hand, as the recommendation function.

For example, by analyzing a user's current touch pattern, the controller 180 determines whether the user's current touch pattern is formed with the left hand or the right hand. By doing this, the controller 180 changes the existing keyboard to a keyboard suitable for the left hand or the right hand.

In addition, if the user's touch pattern is recognized as being formed with both hands, the controller 180 changes the keyboard 680 that can be used with one hand to the keyboard that can be used with both hands. Further, when the user's touch pattern is recognized as being formed with a hand other than the hand with which the currently-executed keyboard is used, the controller 180 changes the currently-executed keyboard to the keyboard corresponding to the hand other than the hand with which the currently-executed keyboard is used.

In addition, as illustrated in FIG. 6E(a) to 6E(c), the controller 180 detects the status information indicating that the user gets in a vehicle. In this instance, the controller 180 executes a Bluetooth function in which a connection is automatically established between the mobile terminal and the vehicle through Bluetooth wireless networking.

Thereafter, the controller 180 receives vehicle identification information from the vehicle. Further, if it is determined that the connection between the mobile terminal and the vehicle is previously established through Bluetooth wireless networking, using the vehicle identification information, the controller 180 outputs a graphic object indicating that the connection is established between the mobile terminal and the vehicle through Bluetooth wireless networking. However, if it is determined that the connection between the mobile terminal and the vehicle is not previously established, the controller 180 ends the Bluetooth function.

In addition, if the user gets off the vehicle while the Bluetooth function is executed, the controller 180 automatically ends the Bluetooth function. Further, the controller 180 detects the brightness of the display unit 151 and the brightness of ambient light outside of the mobile terminal. Using the detected brightness of the display unit 151 and the detected brightness of the ambient light outside of the mobile terminal, the controller 180 adjusts the brightness of the display unit 151 without the user's request also when the brightness of the display unit 151 can be controlled by the user.

That is, the controller 180 temporarily executes a function in which also when the brightness of the display unit 151 is arbitrarily controlled by the controller 180, the brightness of the display unit 151 is automatically adjusted using the status information on the mobile terminal so the normal use of the mobile terminal is prevented.

For example, as illustrated in FIGS. 6F(a) to 6F(d), the controller 180 is in a position of not automatically adjusting the brightness of the display unit 151. Further, the brightness of the display unit 151 is decreased to a reference brightness level or below by the user.

In addition, the controller 180 stores in the memory unit 170 information on the brightness of the display unit 151 that is perceived before the brightness of the display unit 151 is decreased to the reference brightness level or below by the user. Thereafter, the display unit 151 is turned off when the brightness is decreased to the reference brightness level or below.

After the display unit 151 is turned off, the user can apply a control command for turning back on the display unit 151. If the display unit 151 is turned on based on the control command, the display unit 151 detects the brightness of the ambient light outside of the mobile terminal.

Further, when the currently -set brightness of the display unit 151 is at the reference brightness level or below, if the brightness of the ambient light is greater than the current brightness of the display unit 151, the controller 180 changes the current brightness of the display unit 151 to the brightness of the display unit 151that is perceived before the brightness of the display unit 151 is changed to the reference brightness level or below. Along with this, the controller 180 outputs to one region of the display unit 151 a graphic object 611 representing a function of returning the current brightness back to the reference brightness level or below.

Thus, when the display unit 151 is in a manual brightness-setting mode in which the brightness of the display unit 151 is set by the user, although the current brightness is set to the reference brightness level or below, the controller 180 detects the brightness of the ambient light and automatically sets the brightness of the display unit 151 so the user conveniently uses the display unit 151.

In addition, when the mobile terminal is in a state where the brightness of the display unit 151 is adjusted by the user, the controller 180 displays on one region of the display unit 151 a graphic object for returning the automatically adjusted brightness to the brightness that is set by the user and thus provides the user with a function of easily adjusting the brightness of the display unit 151 without a separate setting.

In addition, if a mobile payment application is executed, the controller 180 provides a function associated with a payment as the recommendation function. For example, the function associated with the payment is a function of activating a near field communication (NFC) -based wireless communication.

For example, the controller 180 outputs a graphic object representing the function of activating the NFC-based wireless communication, using the status information in which the executing of the function of activating the NFC-based wireless communication is limited. Thus, the user can easily make a payment using the NFC-based wireless communication.

The executing of the various recommendation functions, which is based on the various pieces of status information detected by the controller 180, is described above. Thus, according to an embodiment of the present invention, the recommendation function suitable for the current status of the user's mobile terminal is provided, and this increases user convenience.

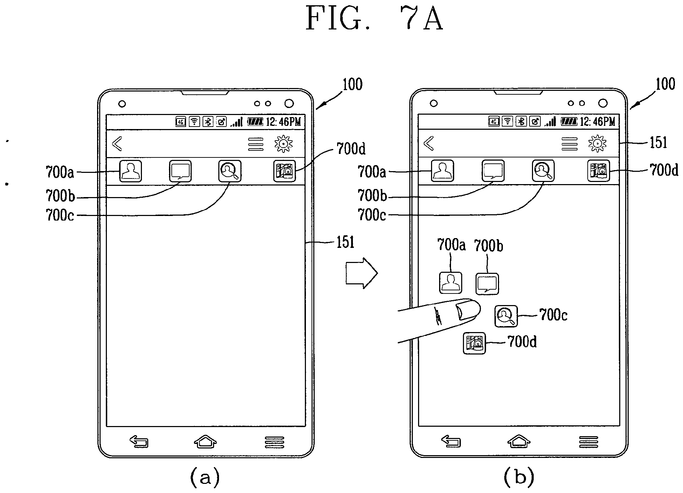

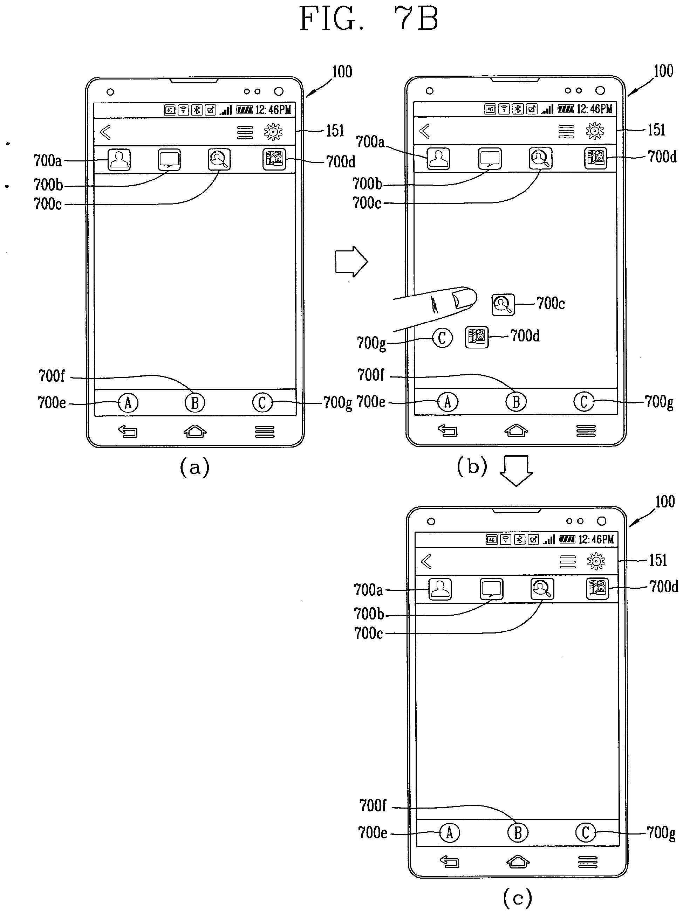

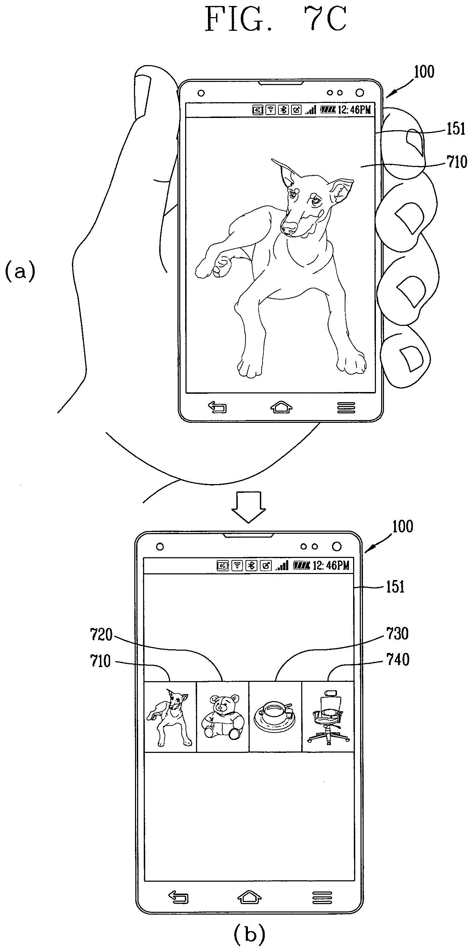

Various user gestures are described below that executes various functions quickly and conveniently. FIG. 7 includes diagrams illustrating a method of executing functions quickly and conveniently using the various user gestures.

The controller 180 outputs a graphic object representing a function that is currently executed, to the vicinity of a region that can be touched on, of the display unit 151 without movements of the user's hand, and this minimizes the movements of the user's hand.

For example, as illustrated in FIG. 7A(a), an execution screen of a specific application is output to the current mobile terminal. Further, graphic objects 700a, 700b, and 700c representing functions associated with the executing of the specific application are displayed on the execution screen.

Further, as illustrated in FIG. 7A(b), in response to a predetermined-type touch (for example, the long touch) applied to the display unit 151, the controller 180 outputs graphic objects 700a, 700b, and 700c representing the functions associated with the specific application to the vicinity of a region to which the touch is applied. The user can also view a user interface in which the graphic objects 700a, 700b, and 700c are moved from positions on which they are originally displayed.

As illustrated in FIG. 7A(b), the graphic objects 700a, 700b, 700c, and 700d are displayed both on the positions on which they are originally displayed and on the vicinity of the region to which the touch is applied. In addition, the graphic objects 700a, 700b, 700c, and 700d cannot be displayed on the positions on which they are originally displayed and displayed only on the vicinity of the region to which the touch is applied.

In addition, when the predetermined-type touch is canceled, the controller 180 no longer displays the graphic objects 700a, 700b, 700c, and 700d that are displayed on the vicinity of the region to which the touch is applied. In response to the application of the predetermined-type touch, the controller 180 displays at least one graphic object, among the graphic objects representing the functions associated with the executing of the specific application, to the vicinity of the region to which the touch is applied.

In addition, the at least one graphic object is a graphic object displayed on a region a predetermined distance away from the region to which the touch is applied. That is, the at least one graphic object is a graphic object that is displayed on a region other than the region to which the touch is applied although the user's hand is not separately moved.

For example, referring to FIGS. 7B(a) and 7B(b), if the predetermined-type touch is applied, at least one or more graphic objects 700c, 700d, and 700c among graphic objects 700a, 700b, 700c, 700d, 700e, 700f, and 700g representing the functions associated with the specific application are displayed on the vicinity of the region to which the touch is applied. Further, at least one or more graphic objects 700c, 700d, and 700e are graphic objects that are displayed on the region to which the user cannot apply the touch naturally.

On the other hand, if the user's touch is not detected, the graphic object that is displayed on the vicinity of the region to which the user applies the touch disappears from the display unit 151. For example, as illustrated in FIG. 7B(c), when the user's touch is not detected, the controller 180 makes at least one or more graphic objects 700c, 700d, and 700e, which are displayed on the vicinity of the region to which the touch is applied, disappear from the display unit 151.

In addition, when a predetermined gesture is detected, the controller 180 displays on the display unit 151 at least one or more pieces of information relating to the information displayed on the current display unit 151. Further, the information displayed on the current display unit 151 includes one image among the multiple images stored in the memory unit 170, one page among the multiple home screen pages, an execution screen of one application, among the multiple application that are currently executed, and the like.

In addition, at least one piece of information relating to the information displayed on the current display unit 151 includes an image different from the one image, a page different from the one page, and an execution screen different from the one execution screen, and the like.

The predetermined gesture is motion in which the user holds the main body 100 of the mobile terminal in a firm grip. For example, as illustrated in FIG. 7C(a), the controller 180 detects the motion in which the user holds the main body 100. Further, one image among the multiple images stored in the memory unit 170 is displayed on the display unit 151.

Further, as illustrated in FIG. 7C(b), the controller 180 displays at least one or more images 710, 720, 730, and 740, among the multiple images, together on the display unit 151. That is, only with the gesture, the user can execute a function associated with a function that is currently executed.

According to an embodiment of the present invention, a graphic object representing at least one recommendation function is output, and in response to application of a touch to the graphic object, the at least one recommendation function is executed. Thus, the functions used for the current status of the user's mobile terminal are easily executed without entering a separate function setting screen, thereby providing the user with the convenience.

In addition, according to an embodiment of the present invention, when the status information is changed, the recommendation function that is executed based on the status information is automatically ended. Thus, according to an embodiment of the present invention, the user is provided with a function that can be executed only in the current state without a separate operation.

In addition, according to an embodiment of the present invention, although a locked state is not entered according to the status information, when the status information is changed, the locked state is entered. Thus, according to an embodiment of the present invention, security is maintained although a function in which the switching to the locked state is not made is executed.

The foregoing embodiments and advantages are merely exemplary and are not to be considered as limiting the present invention. The present teachings can be readily applied to other types of apparatuses. This description is intended to be illustrative, and not to limit the scope of the claims. Many alternatives, modifications, and variations will be apparent to those skilled in the art. The features, structures, methods, and other characteristics of the exemplary embodiments described herein may be combined in various ways to obtain additional and/or alternative exemplary embodiments.

## Claims

1. A mobile terminal comprising:
a wireless communication unit (110) configured to provide wireless communication;
a display unit (151); and
a controller (180) configured to:
display a screen corresponding to an application executed on the mobile terminal,
detect status information of the mobile terminal (S210);
display a graphic object representing a recommendation function on the screen corresponding to the application for changing a current setting of the mobile terminal using the detected status information (S220), wherein the recommendation function is recommended as a function that can be executed along with the application;
receive a selection signal to the graphic object;execute the recommendation function along with the application based on the selection signal (S230) for changing the current setting of the mobile terminal;
cancel the execution of the recommendation function when a current status information of the mobile terminal is different from the detected status information.

2. The mobile terminal of claim 1, wherein the controller (180) is further configured to change the current setting of the mobile terminal to a preferred setting of the mobile terminal without displaying a settings menu for changing the current setting of the mobile terminal.

3. The mobile terminal of claim 1, wherein the current setting of the mobile terminal includes at least of a screen rotation current setting, a GPS current setting, a Wi-Fi current setting and a screen locking current setting.

4. The mobile terminal of claim 3, wherein the screen corresponding to the application includes an image displayed on the mobile terminal,
the current setting of the mobile terminal is a turned off screen rotation setting;
the controller (180) is further configured to execute the recommendation function for turning on the screen rotation setting based on the detected setting of the mobile terminal.

5. The mobile terminal of claim 3, wherein the screen corresponding to the application includes a map displayed on the mobile terminal,
the current setting of the mobile terminal is a turned off GPS setting,
the controller (180) is further configured to execute the recommendation function for turning on the GPS setting based on the detected setting of the mobile terminal.

6. The mobile terminal of claim 3, wherein the screen corresponding to the application includes to a Wi-Fi received image displayed on the mobile terminal,
the current setting of the mobile terminal is a turned on Wi-Fi setting,
the controller (180) is further configured to execute the recommendation function for turning off the Wi-Fi setting based on the detected setting of the mobile terminal.

7. The mobile terminal of claim 3, wherein the controller (180) is further configured to execute the recommendation function for preventing locked screen status of the mobile terminal based on the detected setting of the mobile terminal.

8. The mobile terminal of claim 7, wherein after the recommendation function for preventing locked screen status of the mobile terminal is executed, the controller (180) is further configured to enter the locked screen status when a control command that is not associated with the screen corresponding to the application is applied to the mobile terminal.

9. The mobile terminal of claim 7, wherein after the recommendation function for preventing locked screen status of the mobile terminal is executed, the controller (180) is further configured to enter the locked screen status when an additional control command is not applied for a predetermined time.

10. The mobile terminal of claim 1, wherein the controller (180) is further configured to:
display a list including at least one application currently executing on the mobile terminal,
display the graphic object next to a most frequently used application in the list, and
slidably display a window corresponding to the most frequently used application based on the received selection signal.

11. The mobile terminal of claim 1, wherein the screen corresponding to the application includes multiple image objects linked to multiple functions respectively, the multiple image objects displayed in a first area on the display unit, and
wherein in response to the received selection signal, the controller (180) is further configured to move at least one image object among the multiple image objects from the first area to a vicinity of an area on which the graphic object is displayed.

12. The mobile terminal of claim 11, wherein, when the graphic object is again touched, the controller (180) inactivates the graphic object and does not display the at least one image object on the vicinity of the area on which the graphic object is displayed.

13. The mobile terminal of claim 1, wherein the controller (180) is further configured to display the graphic object in a vicinity of a region on which a last touch input was detected.

14. The mobile terminal of claim 1, wherein the controller (180) is further configured to stop displaying the graphic object based on if a predetermined touch is applied to the graphic object or if the selection signal is not applied to the graphic object for a predetermined time.

## Patentansprüche

1. Mobiles Endgerät, mit:
einer Drahtloskommunikationseinheit (110), die zum Bereitstellen von Drahtloskommunikation ausgebildet ist;
einer Anzeigeeinheit (151); und
einer Steuereinrichtung (180), die ausgebildet ist zum:
Anzeigen eines Bildschirms, der einer auf dem mobilen Endgerät ausgeführten Anwendung entspricht,
Erfassen von Statusinformation des mobilen Endgeräts (S210);
Anzeigen eines eine Empfehlungsfunktion auf dem der Anwendung entsprechenden Bildschirm darstellenden grafischen Objekts zum Ändern einer aktuellen Einstellung des mobilen Endgeräts unter Verwendung der erfassten Statusinformation (S220), wobei die Empfehlungsfunktion als eine Funktion empfohlen wird, die zusammen mit der Anwendung ausgeführt werden kann;
Empfangen eines Auswahlsignals an dem grafischen Objekt;
Ausführen der Empfehlungsfunktion zusammen mit der Anwendung auf der Grundlage des Auswahlsignals (S230) zum Ändern der aktuellen Einstellung des mobilen Endgeräts;
Abbrechen der Ausführung der Empfehlungsfunktion, wenn sich eine aktuelle Statusinformation des mobilen Endgeräts von der erfassten Statusinformation unterscheidet.

2. Mobiles Endgerät nach Anspruch 1, wobei die Steuereinrichtung (180) ferner ausgebildet ist zum Ändern der aktuellen Einstellung des mobilen Endgeräts auf eine bevorzugte Einstellung des mobilen Endgeräts, ohne ein Einstellungsmenü zum Ändern der aktuellen Einstellung des mobilen Endgeräts anzuzeigen.

3. Mobiles Endgerät nach Anspruch 1, wobei die aktuelle Einstellung des mobilen Endgeräts eine aktuelle Bildschirmdrehungseinstellung und/oder eine aktuelle GPS-Einstellung und/oder eine aktuelle Wi-Fi-Einstellung und/oder eine aktuelle Sperrbildschirmeinstellung umfasst.

4. Mobiles Endgerät nach Anspruch 3, wobei der der Anwendung entsprechende Bildschirm ein auf dem mobilen Endgerät angezeigtes Bild umfasst,
die aktuelle Einstellung des mobilen Endgeräts eine abgeschaltete Bildschirmdrehungseinstellung ist und
die Steuereinrichtung (180) ferner ausgebildet ist zum Ausführen der Empfehlungsfunktion zum Einschalten der Bildschirmdrehungseinstellung auf der Grundlage der erfassten Einstellung des mobilen Endgeräts.

5. Mobiles Endgerät nach Anspruch 3, wobei der der Anwendung entsprechende Bildschirm eine auf dem mobilen Endgerät angezeigte Karte umfasst,
die aktuelle Einstellung des mobilen Endgeräts eine ausgeschaltete GPS-Einstellung ist und
die Steuereinrichtung (180) ferner ausgebildet ist zum Ausführen der Empfehlungsfunktion zum Einschalten der GPS-Einstellung auf der Grundlage der erfassten Einstellung des mobilen Endgeräts.

6. Mobiles Endgerät nach Anspruch 3, wobei der der Anwendung entsprechende Bildschirm ein auf dem mobilen Endgerät angezeigtes Wi-Fi-Empfangsbild umfasst,
die aktuelle Einstellung des mobilen Endgeräts eine eingeschaltete Wi-Fi-Einstellung ist und
die Steuereinrichtung (180) ferner ausgebildet ist zum Ausführen der Empfehlungsfunktion zum Ausschalten der Wi-Fi-Einstellung auf der Grundlage der erfassten Einstellung des mobilen Endgeräts.

7. Mobiles Endgerät nach Anspruch 3, wobei die Steuereinrichtung (180) ferner ausgebildet ist zum Ausführen der Empfehlungsfunktion zum Verhindern eines Sperrbildschirmstatus des mobilen Endgeräts auf der Grundlage der erfassten Einstellung des mobilen Endgeräts.

8. Mobiles Endgerät nach Anspruch 7, wobei, nachdem die Empfangsfunktion zum Verhindern des Sperrbildschirmstatus des mobilen Endgeräts ausgeführt wird, die Steuereinrichtung (180) ferner ausgebildet ist zum Eintreten in den Sperrbildschirmstatus, wenn ein Steuerbefehl, der nicht mit dem der Anwendung entsprechenden Bildschirm verknüpft ist, an das mobile Endgerät gegeben wird.

9. Mobiles Endgerät nach Anspruch 7, wobei, nachdem die Empfangsfunktion zum Verhindern des Sperrbildschirmstatus des mobilen Endgeräts ausgeführt wird, die Steuereinrichtung (180) ferner ausgebildet ist zum Eintreten in den Sperrbildschirmstatus, wenn ein zusätzlicher Steuerbefehl für eine vorgegebene Zeit nicht gegeben wird.

10. Mobiles Endgerät nach Anspruch 1, wobei die Steuereinrichtung (180) ferner ausgebildet ist zum:
Anzeigen einer Liste mit mindestens einer Anwendung, die derzeit auf dem mobilen Endgerät ausgeführt wird,
Anzeigen des grafischen Objekts neben einer am häufigsten verwendeten Anwendung in der Liste und
gleitenden Anzeigen eines Fensters, das der am häufigsten verwendeten Anwendung entspricht, auf der Grundlage des empfangenen Auswahlsignals.

11. Mobiles Endgerät nach Anspruch 1, wobei der der Anwendung entsprechende Bildschirm mehrere Bildobjekte umfasst, die mit mehreren Funktionen verknüpft sind, wobei die mehreren Bildobjekte in einem ersten Bereich auf der Anzeigeeinheit angezeigt werden, und
wobei die Steuereinrichtung (180) als Antwort auf das empfangene Auswahlsignal ferner ausgebildet ist zum Bewegen von mindestens einem Bildobjekt aus den mehreren Bildobjekten von dem ersten Bereich zu einer Umgebung eines Bereichs, auf dem das grafische Objekt angezeigt wird.

12. Mobiles Endgerät nach Anspruch 11, wobei, wenn das grafische Objekt wieder berührt wird, die Steuereinrichtung (180) das grafische Objekt deaktiviert und das mindestens eine Bildobjekt nicht in der Umgebung des Bereichs anzeigt, auf dem das grafische Objekt angezeigt wird.

13. Mobiles Endgerät nach Anspruch 1, wobei die Steuereinrichtung (180) ferner ausgebildet ist zum Anzeigen des grafischen Objekts in einer Umgebung eines Bereichs, auf dem eine letzte Berührungseingabe erfasst wurde.

14. Mobiles Endgerät nach Anspruch 1, wobei die Steuereinrichtung (180) ferner ausgebildet ist zum Beenden der Anzeige des grafischen Objekts basierend darauf, ob eine vorgegebene Berührung auf das grafische Objekt angewendet wird oder ob das Auswahlsignal für eine vorgegebene Zeit nicht auf das grafische Objekt angewendet wird.

## Revendications

1. Terminal mobile comprenant :
une unité de communication sans fil (110) configurée pour fournir une communication sans fil ;
une unité d'affichage (151) ; et
un contrôleur (180) configuré pour :
afficher un écran correspondant à une application exécutée sur le terminal mobile,
détecter des informations d'état du terminal mobile (S210) ;
afficher un objet graphique représentant une fonction de recommandation sur l'écran correspondant à l'application pour changer un réglage actuel du terminal mobile en utilisant les informations d'état détecté (S220), dans lequel la fonction de recommandation est recommandée comme une fonction qui peut être exécutée avec l'application ;
recevoir un signal de sélection sur l'objet graphique ;
exécuter la fonction de recommandation avec l'application en se basant sur le signal de sélection (S230) pour changer le réglage actuel du terminal mobile ;
annuler l'exécution de la fonction de recommandation lorsque des informations d'état actuel du terminal mobile sont différentes des informations d'état détecté.

2. Terminal mobile selon la revendication 1, dans lequel le contrôleur (180) est en outre configuré pour changer le réglage actuel du terminal mobile pour un réglage préféré du terminal mobile sans afficher de menu de réglage pour changer le réglage actuel du terminal mobile.

3. Terminal mobile selon la revendication 1, dans lequel le réglage actuel du terminal mobile comprend au moins l'un parmi un réglage actuel de la rotation d'écran, un réglage actuel du GPS, un réglage actuel de la Wi-Fi, et un réglage actuel du verrouillage d'écran.

4. Terminal mobile selon la revendication 3, dans lequel l'écran correspondant à l'application comprend une image affichée sur le terminal mobile,
le réglage actuel du terminal mobile est un réglage de rotation d'écran désactivée ;
le contrôleur (180) est en outre configuré pour exécuter la fonction de recommandation pour activer le réglage de rotation d'écran sur la base du réglage détecté du terminal mobile.

5. Terminal mobile selon la revendication 3, dans lequel l'écran correspondant à l'application comprend une carte affichée sur le terminal mobile,
le réglage actuel du terminal mobile est le réglage du GPS désactivé,
le contrôleur (180) est en outre configuré pour exécuter la fonction de recommandation pour activer le réglage du GPS sur la base du réglage détecté du terminal mobile.

6. Terminal mobile selon la revendication 3, dans lequel l'écran correspondant à l'application comprend une image reçue par Wi-Fi affichée sur le terminal mobile,
le réglage actuel du terminal mobile est un réglage de la Wi-Fi désactivée,
le contrôleur (180) est en outre configuré pour exécuter la fonction de recommandation pour désactiver le réglage de la Wi-Fi sur la base du réglage détecté du terminal mobile.

7. Terminal mobile selon la revendication 3, dans lequel le contrôleur (180) est en outre configuré pour exécuter la fonction de recommandation pour empêcher l'état d'écran verrouillé du terminal mobile sur la base du réglage détecté du terminal mobile.

8. Terminal mobile selon la revendication 7, dans lequel, après que la fonction de recommandation destinée à empêcher l'état d'écran verrouillé du terminal mobile a été exécutée, le contrôleur (180) est en outre configuré pour entrer dans l'état d'écran verrouillé lorsqu'une instruction de commande qui n'est pas associée à l'écran correspondant à l'application est appliquée au terminal mobile.

9. Terminal mobile selon la revendication 7, dans lequel après que la fonction de recommandation destinée à empêcher l'état d'écran verrouillé du terminal mobile a été exécutée, le contrôleur (180) est en outre configuré pour entrer dans l'état d'écran verrouillé lorsqu'une instruction de commande additionnelle n'est pas appliquée pendant un temps prédéterminé.

10. Terminal mobile selon la revendication 1, dans lequel le contrôleur (180) est en outre configuré pour :
afficher une liste incluant au moins une application actuellement en cours d'exécution sur le terminal mobile,
afficher l'objet graphique à côté de l'application la plus fréquemment utilisée dans la liste, et
afficher de manière coulissante une fenêtre correspondant à l'application la plus fréquemment utilisée sur la base du signal de sélection reçu.

11. Terminal mobile selon la revendication 1, dans lequel l'écran correspondant à l'application comprend de multiples objets d'image reliés à de multiples fonctions, respectivement, les multiples objets d'image étant affichés dans une première zone sur l'unité d'affichage, et
dans lequel, en réponse au signal de sélection reçu, le contrôleur (180) est en outre configuré pour déplacer au moins un objet d'image parmi les multiples objets d'image depuis la première zone vers un voisinage d'une zone sur laquelle l'objet graphique est affiché.

12. Terminal mobile selon la revendication 11, dans lequel, lorsque l'objet graphique est à nouveau touché, le contrôleur (180) désactive l'objet graphique et n'affiche pas le au moins un objet d'image sur le voisinage de la zone sur laquelle l'objet graphique est affiché.

13. Terminal mobile selon la revendication 1, dans lequel le contrôleur (180) est en outre configuré pour afficher l'objet graphique au voisinage d'une région sur laquelle une dernière entrée tactile a été détectée.

14. Terminal mobile selon la revendication 1, dans lequel le contrôleur (180) est en outre configuré pour arrêter d'afficher l'objet graphique selon si un toucher prédéterminé est appliqué sur l'objet graphique ou si le signal de sélection n'est pas appliqué sur l'objet graphique pendant un temps prédéterminé.
